(19) **Europäisches Patentamt European Patent Office Office européen des brevets**

(11) **EP 2 001 656 B1**

(12) **EUROPEAN PATENT SPECIFICATION**

(45) Date of publication and mention of the grant of the patent:
**15.10.2014 Bulletin 2014/42**

(51) Int Cl.:
**B29C 67/00** $^{(2006.01)}$    *B29K 101/10* $^{(2006.01)}$
*B29K 105/16* $^{(2006.01)}$    *B29K 101/12* $^{(2006.01)}$

(21) Application number: **07774361.5**

(22) Date of filing: **03.04.2007**

(86) International application number:
**PCT/US2007/008046**

(87) International publication number:
**WO 2007/114895 (11.10.2007 Gazette 2007/41)**

(54) **KiT FOR THE PRODUCTION OF THREE-DIMENSIONAL OBJECTS BY USE OF ELECTROMAGNETIC RADIATION**

SET ZUR HERSTELLUNG DREIDIMENSIONALER OBJEKTE DURCH VERWENDUNG ELEKTROMAGNETISCHER STRAHLUNG

KIT POUR LA PRODUCTION D'ÉLÉMENTS TRIDIMENSIONNELS AU MOYEN DE RADIATIONS ÉLECTROMEGNÉTIQUES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.04.2006 US 789758 P**

(43) Date of publication of application:
**17.12.2008 Bulletin 2008/51**

(73) Proprietor: **3D Systems Incorporated Rock Hill SC (US)**

(72) Inventors:
• **GILLER, Eugene**
  **Needham, MA 02492 (US)**
• **BREDT, James F.**
  **Watertown, MA 02472 (US)**
• **DAVIDSON, Thomas**
  **Arlington, MA 02476 (US)**
• **WILLIAMS, Derek X.**
  **Berwick, ME 03901 (US)**
• **ALAM, Amir**
  **Marlborough, MA 01752 (US)**
• **BARRINGTON, Benjamin**
  **Burlington, MA 01803 (US)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) References cited:
**WO-A-97/32671        WO-A-2005/011959**
**WO-A-2005/090055      WO-A-2005/105412**
**WO-A2-2004/005014     US-A1- 2004 166 187**
**US-A1- 2005 003 189**

**EP 2 001 656 B1**

**Description**

Related Application

This application claims the benefit of and priority to U.S. Provisional Application Serial No. 60/789,758 filed April 6, 2006.

Field of the Invention

The invention relates to a kit for producing three-dimensional objects from a particulate material by melting and adhering, for example, by fusion or sintering, portions of the particulate material; the heat needed for the bonding of the particulate material may be generated by a laser, or a non-oriented and/or non-monochromatic and/or non-coherent energy source of wavelength from 100 nm to 1mm or by electromagnetic induction by way of an absorber, and transferred by way of the absorber to the subregions of the particulate material. Additionally, according to an embodiment which does not form part of the present invention, heat may be supplied by a chemical reaction between reactive components in the fluid, particulate material, or both.

Background

There is a need for the rapid production of prototypes. Stereolithography, a process that fabricates models in a bath of liquid photopolymer, needs complicated support structures to retain the solidified material in the liquid bath, and the resultant prototypes have relatively poor mechanical properties, attributable to a limited number of starting materials. Another process for rapid prototyping is selective laser sintering (SLS), which has become widespread. In this process, granulated polymers in a chamber are selectively irradiated briefly with a laser beam, resulting in the melting of the particles on which the laser beam falls. The molten particles coalesce and solidify again relatively rapidly to give a solid mass. Complex three-dimensional bodies can be produced simply and rapidly by this process by repeatedly applying fresh layers of polymer and irradiating these layers.

The process of laser-sintering (rapid prototyping) to form moldings composed of pulverulent polymers has been described in the literature. The SLS processes typically have the disadvantage of requiring a focused laser beam. The laser, functioning as energy source, may be expensive and sensitive, as is the optical equipment needed for the production and focusing of the laser beam, such as lenses, expanders, and deflector mirrors.

Other processes have been developed for rapid prototyping, but have not been introduced to the market. For example, a previously developed process for producing prototypes is based on printed inhibitors that prevent sintering in selected regions, the unprinted regions later being sintered by heat. This process can operate without any complicated laser technology. A disadvantage of this process is that the surrounding particulate material that was not sintered still contains the inhibitor, and therefore, cannot be recycled. In addition, this process may require the development of new software, specifically because it is the surrounding area that is printed, and not, as in other cases, the cross section of the part. For undercuts and changes in cross section, inhibitors are typically deposited over a large surface area. In addition, there is a risk of heat build up in the developing prototype.

The use of microwave radiation for the melting of polymers is described in U.S. Pat. No. 5,338,611. In this process, pulverulent polymers and nano-scale carbon black are used. However, this reference does not describe the production of prototypes. Reference DE 197 27 677 describes a method of generating prototypes by exposing selected regions of layers of particulate material to a focused microwave beam. The controlled microwave beam bonds the exposed particulate material within a layer, and also bonds this particulate material to the particulate material in the layer situated thereunder. Bonding takes place via adhesive bonding, sintering, or fusion. This process may also require complicated technology to ensure that the microwave radiation reaches only the selected regions.

Prototyping methods that use focused sources of radiation are relatively expensive and complicated and may require frequent maintenance. The microwave process ameliorates some of these problems by using a cheaper source of radiation that does not need to be focused. Microwave radiation, however, may be troublesome to contain, particularly in situations where electronic components are in close proximity to the microwave source.

Another method for creating three dimensional prototypes employs infrared light to bond thermoplastic and thermoset particulate materials in a sequence of patterned layers. In this process, the pattern for each layer is formed into a mask on a glass plate by an electrostatic imaging process. The glass plate used to filter infrared light into a programmed pattern over a layer of loose particulate material. While this method possesses the advantage of being relatively fast, it may require the creation of a collimated beam of light that can form a sharp image on the surface of a build area, i.e., the region in the machine where the build material is solidified by an imaging process to form a solid article. The light rays in this beam are typically oriented parallel to one another in order to cast sharply defined patterns of radiation on the surface of the particulate material. A special collimating filter may be included with the light source in order to achieve this, and the dissipation of the large fraction of filtered-out radiation is left unresolved. Further, this approach poses little opportunity to control the undesirable flow of heat by direct conduction from bonded regions into adjacent unbound regions within the particulate material bed.

WO 2005/090055 A1 relates to a method and device for joining material in order to produce three-dimensional objects by means of selective heating effected by a laser having a wavelength ranging from 100 to 3000 nm.

WO 2005/105412 A1 relates to a method and device for the bonding of material to give three-dimensional by means of selective heating using electromagnetic energy which is either non-coherent and/or non-monochromatic and/or non-directed at a wavelength of 100 nm to 1 mm and using a heat absorber.

WO 2005/011959 discloses a method of selectively combining particulate material, for example plastic materials by sintering, comprising providing a layer of particulate material, providing radiation over the layer and varying the absorption of the provided radiation across a selected surface portion of the layer to combine a portion of the material of the layer.

US 2004/0166187 A1 describes a cooling system for removing heat from the layers of a three-dimensional object built in a layerwise manner from a build material in a solid freeform fabrication apparatus.

WO 97/32671 relates to the preparation of a self-supporting or free-standing three-dimensional unitary structural body by a method including generating successively a plurality of cross-sectional layers of the body, one layer on top of the other and with the layers joined together to form the body and with the generating of a cross-sectional layer comprising a plurality of drops of a liquid composition containing a first reactant in a pattern of discrete drops making up the cross-sectional layer.

US 2005/0003189 Al relates to rapid prototyping techniques and to three-dimensional printing material and a method using thermoplastic particulate mixtures.

WO 2004/005014 discloses an apparatus, systems and methods for use in three-dimensional printing.

See also DE 10 2004 020 452.7, WO 2005/105412, and U.S. Patent Publication Number 2004/0232583 A1.

Summary of the Invention

The invention features a kit according to claim 1.

In an aspect, a process for the production of three- dimensional objects is featured using a simple, low-cost apparatus that is substantially unsusceptible to failure. The components of the apparatus are preferably of robust design. In another aspect, an object produced by this process is described. In yet another aspect, the aforementioned apparatus for the production of three-dimensional objects is described.

More particularly, a process for producing a three-dimensional object may include the following steps:

a) providing a layer of a dry particulate material,

b) selectively applying at least a first absorber to one or more regions of the particulate material, wherein the one or more regions are selected in accordance with a cross section of the three-dimensional object,

c) optionally causing a chemical reaction to occur between reactive components in the particulate material, such reaction stimulated by a liquid component otherwise serving as a vehicle for deposition of the absorbers,

d) treating the layer with electromagnetic energy that may be spatially incoherent (i.e., unfocused and uncollimated), polychromatic, or phase-incoherent, using an unfocused laser of wavelength from 100 nm to 1mm; radiant heaters or emission lamps applying radiation comprising visible (400 nm - 750 nm), IR-A (750 nm - 1400 nm) or IR-B (1400 - 5000 nm) radiation; or by electromagnetic induction through an oscillating magnetic field to melt, sinter, or bond through a thermally activated chemical reaction the one or more regions containing the first absorber to the layer of particulate material, and, optionally, to melt, sinter, or bond through a thermally activated chemical reaction the one or more regions containing the first absorber with other regions located in one or more substrate layers situated thereunder, thereabove, or combinations thereof, wherein the other regions optionally contain a second absorber, and wherein the first absorber and the second absorber are the same or different, and

e) cooling the layer, passively or actively.

Additional aspects include the production of three-dimensional objects prepared according to the described process, and an apparatus for producing three-dimensional objects.

It has been found that three-dimensional objects may be produced from particulate materials bonded relatively simply by means of low-cost lasers or non-laser sources of electromagnetic energy, the radiation from which is not spatially coherent (in other words, neither focused nor collimated) and/or from a diffuse source and may emit a range of wavelengths outside of the microwave range, by applying one or more absorbers to those regions to be bonded in a layer of a particulate material. The particulate material absorbs radiation only poorly or not at all, while the absorber(s) absorbs the radiation and passes the energy absorbed in the form of heat to the particulate material surrounding the absorber(s). This results in the melting and fusing of the particulate material and where appropriate, the melting and fusing of the particulate material to another layer situated thereunder or thereover. The susceptible regions may be fused or sintered. The absorber may be applied using a printing head, similar to that of an inkjet printer.

The absorber process described here provides a reasonably accurate way to deliver heat to a printed layer in a 3D Printer. The class of printers addressed herein are generally those in which a dry particulate build material is treated with a liquid deposited in a cross-section of an article to be built, this liquid engendering a solidification or bonding mechanism in the particulate build material. Suitable printers are described, for example, in U.S. Patent No. 5,204,055.

Melting and fusion or sintering of thermoplastic particulate materials is only one method by which heat can form a solid structure in a printed layer. For example, certain reactive mixtures of monomers or oligomers are stable as particulate materials at room temperature but melt and form a crosslinked polymer when exposed to heat. These "thermoset" materials are more compatible with inert fillers than are thermoplastic materials because they have a lower viscosity on melting, and therefore they can flow a greater distance and merge filler particles more completely before solidifying.

Additionally, some reactive combinations of particulate materials, such as cements, anhydrous salts, and organic anhydrides, may react with the water in the fluid only under the action of heat. For these types of chemical reactions, the radiation may be thought of as providing the activation energy to initiate a chemical reaction between the fluid and certain reactive components in the particulate material.

Thermoplastic and thermoset particulate materials are available as commercial formulations for other processes, such as powder-coating for metal finishing. Many, if not all, currently available formulations may be unsuitable for 3D Printing because the blends sold for other purposes may not fall within a relatively narrow range of particle size and frictional characteristics preferred to enable 3D Printing. A commercial blend of powder-coating material may be rendered useable in the described processes only by further processing, such as by milling and classifying the particulate material, or by adding one or several particulate or liquid additives, or by aggregating or coating thermoplastic compositions onto grains of inert fillers or combinations thereof. The additives may additionally provide some improvement in performance, such as stiffness, but the frictional characteristics of the blend are vitally important in determining their handling properties during spreading and therefore determine the usability of a particular formula.

One aspect features a material system for three dimensional printing. The material system includes a granular material that includes a first particulate adhesive including a thermoset material and/or a thermoplastic material. The material system also includes an absorber capable of being heated upon exposure to electromagnetic energy sufficiently to bond the granular material. A static and a dynamic friction coefficient of the granular material possess a relationship defined by a Bredt parameter having a value in excess of 0.1

One or more of the following features may be included. The thermoplastic material may include or consist of polyphenylsulfone, polyacrylonitrile, polycondensates of urea-formaldehyde, polyolefins, cyclic polyolefins, polyvinyl butyral, polyvinyl chlorides, acrylics, ethyl cellulose, hydroxyethyl cellulose, hydroxypropyl cellulose, methyl cellulose, cellulose acetate, hydroxypropylmethyl cellulose, hydroxybutylmethyl cellulose, hydroxyethylmethyl cellulose, ethylhydroxyethyl cellulose, cellulose xanthate, and combinations and copolymers thereof.

The thermoset material may include or consist of epoxy with aromatic amines, epoxy with aliphatic amines, amides, acid anhydrides, multifunctional acids; isocyanate/amine, isocyanate/alcohol, unsaturated polyesters, vinyl esters, unsaturated polyester and vinyl ester blends, unsaturated polyester/urethane hybrid resins, polyurethane/urea, reactive dicyclopentadiene resin, reactive polyarnides, polyester sulfones, a moisture-curable hot melt polyurethane, pulverized/encapsulated epoxy in combination with pulverized dicyanamide, at least one of high molecular-weight polyols, high molecular-weight polyamines, and high molecular-weight polythiols in combination with at least one of isocyanates, diacids, polyacids, and multifunctional acid anhydrides, and combinations and copolymers thereof..

The granular material may include a second adhesive material.

The first adhesive may be at least partially soluble in a fluid applied to the granular material during three dimensional printing. The at least partially soluble adhesive may include or consist of polyvinyl alcohol, sulfonated polyester polymer, sulfonated polystyrene, octylacrylamide/acrylate/ butylaminoethyl methacrylate copolymer, acrylates/octylacrylamide copolymer, polyacrylic acid, polyvinyl pyrrolidone, styrenated polyacrylic acid, polyethylene oxide, sodium polyacrylate, sodium polyacrylate copolymer with maleic acid, polyvinyl pyrrolidone copolymer with vinyl acetate, butylated polyvinylpyrrolidone, polyvinyl alcoholco-vinyl acetate, and combinations and copolymers thereof.

The granular material may include a filler. The filler may be inert. The inert filler may include or consist of plaster, terra alba, bentonite, calcium silicate, calcium phosphate, magnesium silicate, magnesium phosphate, aluminum oxide, aluminum hydroxide, limestone, dolomite, wollasonite, mica, glass fiber, glass powder, cellulose fiber, silicon carbide fiber, graphite fiber, aluminosilicate fiber, mineral fiber, and combinations thereof.

The inert filler may include or consist of an organic filler such as starch, modified starch, maltodextrin, cellulose, polypropylene fiber, polyamide flock, rayon, polyvinyl alcohol fiber, sugars and sugar alcohols, carbohydrates, and combinations thereof.

The filler may include or consist of a highly reflective particulate material, such as a metal oxide particle, high refractive index glass, sapphire; metal dust, and/or a particle comprising at least two materials with significantly different refractive indices. The metal oxide particle may include titania and/or zirconia. The metal dust may include or consist of aluminum and steel. The particle comprising at least two materials may be a hollow glass bead and/or a core/shell glass bead. The metallic oxide may include or consist of titanium dioxide, aluminum oxide, magnesium oxide, zinc oxide, amorphous silica, fumed silica, and crystalline silica.

The filler may be chemically reactive with a fluid applied to the granular material during three dimensional printing to form a partly bonded structure to reduce contraction or expansion of the first particulate adhesive.

The filler may be chemically reactive with a fluid applied to the granular material during three dimensional printing to generate heat that causes the first particulate adhesive to bond form a solid article.

The filler may include an active filler, such as plaster, bentonite, sodium silicate, salt, Portland cement, magnesium phosphate cement, magnesium chloride cement, magnesium sulfate cement, zinc phosphate cement, calcium phosphate cement, zinc oxide - eugenol cement, and combinations thereof.

The granular material may include a plasticizer selected to lower a melting point of the first adhesive material. The plasticizer may include or consist of mineral oils; phthalates, phosphates, adipates - dioctyl phthalate, dioctyl adipate, diisononyl phthalate, dibenzyl phthalate, dipropylene glycol dibenzoate, triaryl phosphate ester; epoxidized soybean oil, glycerol, propylene glycol, urea, ethoxylated glycerol, butanediol, pentanediol, hexanediol, erythritol, xylitol, sorbitol, and combinations thereof.

The granular material may include a plasticizer selected to lower a flow viscosity of the first adhesive material upon melting. The plasticizer may include or consist of mineral oils; phthalates, phosphates, adipates - dioctyl phthalate, dioctyl adipate, diisononyl phthalate, dibenzyl phthalate, dipropylene glycol dibenzoate, triaryl phosphate ester; epoxidized soybean oil, glycerol, propylene glycol, urea, ethoxylated glycerol, butanediol, pentanediol, hexanediol, erythritol, xylitol, and sorbitol.

Another aspect features a process for producing a three-dimensional object, the process including the following steps: a) providing a first layer of a dry particulate material; b) selectively applying at least a first absorber to a region of the first layer of the dry particulate material, the region being selected in accordance with a cross section of the three-dimensional object; c) treating the first layer with electromagnetic energy including at least one of spatially incoherent, polychromatic, and phase-incoherent, the electromagnetic energy being absorbed by the absorber to heat the treated region so as to melt or sinter the dry particulate material disposed in the region; and d) cooling the first layer.

One or more of the following features may be included. The electromagnetic energy may be applied by a source selected from the group consisting of an unfocused laser of wavelength from 100 nm to 1 mm; a radiant heater or emission lamp radiation comprising at least one of visible (400 nm - 750 nm), IR-A (750 nm - 1400 nm) and IR-B (1400 - 5000 nm) radiation; and an oscillating magnetic field producing electromagnetic induction. The absorber may be applied as a component in a first fluid, the process further comprising causing a chemical reaction to occur between reactive components in the powder, wherein the fluid stimulates the reaction.

The process may include melting or sintering the first region of the dry particulate material to a second region disposed in a second layer of dry particulate material situated proximate the first layer. The second region may include a second absorber. The first absorber and the second absorber are the same or different.

Yet another aspect features a process for producing a three- dimensional object, the process including the steps of: a) providing a first layer of a dry particulate material; b) selectively applying a first fluid to a region of the first layer of the dry particulate material, wherein the region is selected in accordance with a cross section of the three-dimensional object; c) causing a chemical reaction to occur with a first reactive component of the dry particulate material, and releasing energy by this reaction in the form of heat to melt or sinter the region of the particulate material containing the fluid; and d) cooling the layer.

The chemical reaction may occur between the first reactive component and the fluid. The dry particulate material may include a second reactive component, and the chemical reaction may occur between the first and second reactive components, and may be stimulated by the fluid.

The process may include melting or sintering the region comprising the fluid to a second region of a second layer of dry particulate material disposed proximate the first layer. The process may include controlling a temperature of the region of the first layer of the particulate material by depositing a second fluid having a boiling point below a bonding point of the particulate material, and the first fluid may be deposited in a first pattern and the second fluid may be deposited in a second pattern surrounding the first pattern defined by the first fluid.

The process may include selectively applying a second fluid to the region of first layer of the particulate material, the second fluid comprising a reactive monomer and a photoinitiator, the reactive monomer being solidified by the application of electromagnetic radiation.

The process may include removing unsintered particulate material; depositing a layer of a second particulate material in a second region, wherein the second region excludes the first region; sintering or otherwise bonding the second particulate material by at least one of application of heat and a solvent action of a printed fluid to form a support structure that is contiguous with the region of the first layer of the dry particulate material powder and with a movable platform defining a build surface for the three-dimensional object.

A temperature of support structure may be controlled by cooling the moveable platform and allowing heat to conduct from the three-dimensional object formed by the first material and through the support structure formed by the second material.

Another aspect features a machine for three-dimensional printing including a printing device; a spreading mechanism; a heat source; and a temperature controller, the temperature controller including at least one of a non-contact thermometer, a software algorithm that responds to the thermometer, a heat-transfer surface disposed within a build box, and a cooling mechanism that operates by flowing air over a powder surface.

The invention features a kit for three dimensional printing according to claim 1.

One or more of the following features may be included according to embodiments not forming part of the invention. The first solvent may include or consist of ethanol, isopropanol, n-propanol, methanol, n-butanol, a glycol, an ester, a glycolether, a ketone, an aromatic, an aliphatic, an aprotic polar solvent, a terpene, an acrylate, a methacrylate, a vinylether, an oxetane, an epoxy, a low molecular weight polymer, carbonate, n-methylpyrrolidone, acetone, methyl ethyl ketone, dibasic esters, ethyl acetate, dimethyl sulfoxide, dimethyl succinate, and combinations thereof.

The second solvent may have a second boiling point lower than a melting point of the particulate adhesive material.

The second solvent may have a second boiling point lower than a sintering point of the first particulate adhesive material. The second solvent may include or consist of water.

The absorber may be adapted to absorb electromagnetic radiation at a wavelength selected from a range of 100 nm to 1 mm. The absorber may be adapted to suscept an oscillating magnetic field and heat by electromagnetic induction and may include or consist of a metal, granular carbon, a polar organic compound, an aqueous solution of an ionic substance, and a minerals having a high conductivity.

The fluid further may include a flowrate enhancer and/or a reactive monomer.

Brief Description of the Figures

Various features and advantages of embodiments of the present invention will be more fully appreciated, as the same become better understood from the following detailed description, when considered in connection with the accompanying drawings, in which referenced characters designate like or corresponding parts.

Figures 1a - 1b are schematic side views of an embodiment of an apparatus;

Figures 2a - 2f and 3a - 3t are schematic diagrams illustrating processes for forming an object;

Figure 4 is a schematic illustration of a circulating spreader bead; and

Figures 5 and 6 are graphs illustrating the forces acting on a particle during three dimensional printing.

Detailed Description

*PROCESS DESCRIPTION*

An embodiment features a process for producing a three- dimensional object, including the steps of:

a) providing a layer of dry particulate material,

b) selectively applying a first absorber to one or more regions of the particulate material, wherein the one or more regions are selected in accordance with a cross section of the three-dimensional object,

c) optionally causing a chemical reaction to occur between reactive components in the particulate material, such reaction stimulated by a liquid component otherwise serving as a vehicle for deposition of the absorber,

d) treating the layer with electromagnetic energy that may be spatially incoherent (i.e., unfocused and uncollimated), polychromatic, or phase-incoherent, using an unfocused laser of wavelength from 100 nm to 1mm; radiant heaters or emission lamps applying radiation comprising visible (400 nm - 750 nm), IR-A (750 nm - 1400 nm) or IR-B (1400 - 5000 nm) radiation; or by electromagnetic induction through an oscillating magnetic field to melt, sinter, or bond through a thermally activated chemical reaction the one or more regions containing the first absorber to the layer of particulate material, and, optionally, to melt, sinter, or bond through a thermally activated chemical reaction the one or more regions containing the first absorber with other regions located in one or more layers situated thereunder, thereabove, or combinations thereof,

wherein, the other regions optionally contain a second absorber, and wherein the first absorber and the second absorber are the same or different, and

e) cooling the layer.

In this process, the absorber is applied in accordance with the cross section of the three-dimensional object, and specifically may be applied in such a way that the absorber is applied only to the regions that make up the cross section of the three-dimensional object or to create a support structure in regions surrounding or beneath the object.

In one embodiment, step d may be carried after one or more consecutive executions of steps a and b. The above method also takes into account the material-dependent penetration depth of the electromagnetic radiation, as required by the particulate material. For example, depending on the particulate material and on the number of repetitions of steps a, a single treatment with electromagnetic radiation or induction heating may not be sufficient to melt all of the regions treated with absorber in the layer or layers present in a construction chamber. In an apparatus that continually applies heat into the build area, some degree of thermal control may be required. Under instructions from a control algorithm, the apparatus may suspend heating steps, or modulate the exposure time during heating or modulate the cooling time between layers.

In one embodiment of a thermal control system, a temperature sensor, e.g., a non-contact infrared thermometer, may be used to measure the surface temperature of the printed layers and the information used to adjust the exposure time to the heater or the cooling time between layers.

In another embodiment of a thermal control system, the information derived from surface temperature measurements may be used to modulate the concentration of absorber deposited in each layer in order to increase or decrease the effectiveness of the irradiation of the material.

In another embodiment of a thermal control system, the information derived from surface temperature measurements may be used to modulate the deposition of a quenching agent, for example, a water-based ink not containing any absorber whose evaporation consumes excess heat.

In another embodiment, a material may be added to the particulate material that changes phase at an intermediate temperature above or below the sintering or melting temperature of the particulate material. This may create a heat sink that becomes active at a particular temperature to reduce overheating in irradiated areas or to provide a buffer against undesired heat conduction into areas where sintering or melting is not desired.

In another embodiment of a thermal control system, a quenching agent may be applied to regions immediately outside the volume of the part being built to cool surrounding material and prevent it from adhering to the outside of the part. This quenching agent does not absorb the wavelength(s) of light used to sinter the areas printed with absorber (or absorbs them poorly). If the chosen material has a relatively high specific heat, a high heat of vaporization, and a boiling point below a melting point of the polymer, the heat flowing out of the part by, e.g., through convection, conduction, or radiation, may be dissipated by heating and vaporizing the quenching agent material rather than melting the particulate material. Thus, a sharp edge may be created between sintered and unsintered areas.

A suitable quenching agent may be water, or water with surfactants and other materials to aid the jetting process from the inkjet. InkJet printing inks containing additional organic additives with moderately low boiling points may function as quenching agents as well. 1-4 butanediol, 1-2 propanediol, diethylene glycol, isopropyl alcohol, and/or ethyl alcohol may all be used as quenching agents provided these substances do not possess any solvency for the polymers in the build material. To limit heat conduction downward, an underlying layer below the layer to be sintered may be printed with a printhead plumbed to a reservoir of the quenching agent. To limit heat conduction laterally, an area around the part may be printed with quenching agent while the absorber material is being printed. The use of water as a quenching agent has several advantages: water is environmentally friendly, water is compatible with inkjet technology, and water may evaporate without leaving a residue so that the unsintered particulate material may be reused.

In another embodiment of a thermal control system, a cooling device may be incorporated into a surface surrounding the build chamber, for example, in the build piston, in order to carry heat away from the build chamber. This device may be a build plate with an embedded cooling channel that carries a fluid heat-transfer medium in communication with an external heat exchanger; a heat exchanger in close thermal contact with the build plate and cooled by airflow; or a solid-state thermoelectric (Peltier) device that extracts heat from the build plate and conducts it into an external heat sink. Such a mechanism may require the presence of a support structure printed beneath the part whose density facilitates heat conduction from the part to the cooling device across the volume of particulate material that separates them. A support structure may be needed for several reasons, as discussed below.

In another embodiment of a thermal control system, a cooling device may be built onto the moving apparatus that dispenses absorber. Such a cooling device may consist of a forced-air nozzle, either drawing a vacuum or pushing cooled air towards the build area.

In yet another embodiment of a thermal control system, a mathematical model for the heat requirement may be derived from the electronic data encoding the part; such information may be used to program the degree of radiation exposure, absorber dosage, or any other controlling method that is applied throughout the subsequent build process.

For an embodiment of this process in which the absorber is deposited in a liquid vehicle, and the liquid vehicle has a boiling point lower than the melting or sintering temperature of the particulate material, sufficient heat is preferably delivered to the absorber to evaporate the liquid vehicle before bonding of particulate material can occur.

Just enough energy to dry the particulate material prior to sintering may be provided by passing the lamp at high speed or lower intensity. For example, the heat typically required to boil away a given volume of water is approximately ten times the heat necessary to raise the same volume of most plastics to their respective melting point. A first predrying pass of the heater may allow one to preheat the material and to sinter it with lower energy at a second pass, thus decreasing shrinkage and warping.

The step of irradiating the build area and heating the absorber-infused portions of the build material may be postponed until after a layer of untreated build material has been spread over the most recently treated layer. The untreated build material is largely transparent to the radiation, so the energy is transmitted directly to the absorber situated immediately below. This may cause the layer of fresh build material to be bonded very tightly to the previous layer, enhancing the knitting between layers. It is also quite possible that radiation treatment may not be necessary on every layer if the radiation is capable of penetrating absorber-treated build material to a depth greater than one layer. After the process has been in operation for a few cycles past the first layer, the temperature of the build may rise to a steady- state value, reducing the overall energy requirement. An efficient temperature-control algorithm using a non-contact thermometer to monitor the temperature cycling may automatically resolve whether or not any given layer requires additional radiation.

In one particular embodiment of the present process, radiation treatment of the build material may be performed only after the entire layering process is complete. Certain embodiments of the energy-application mechanism are particularly well-suited to this process, especially microwave heating as disclosed in U.S. Patent Publication Number 2004/0232583 A1 and induction heating as disclosed herein. This step may take place in a lower construction chamber, or in another suitable place within the apparatus. The irradiation step may also be carried out in an apparatus other than the apparatus used for carrying out the spreading and printing steps, i.e., for carrying out steps a and b, respectively. By way of example, a matrix generated by means of steps a and b, and composed of treated layers of particulate material, may be transferred into a commercially available microwave oven or induction heater, where the irradiation step is then performed. These possibilities make the present process particularly suitable for applications in the home or office.

Three-dimensional models may be produced by the described processes. These three-dimensional objects, produced layer-by-layer, are present at the end of the present process, within a matrix that is formed from two or more layers. The object may be removed from this matrix that is composed of fused and unfused particulate material. The unfused particulate material may be reused, where appropriate, after separation, for example, by sieving.

Aspects encompass articles produced by the described process. These may be appearance models or facsimile prototypes for design verification or pilot manufacturing of new products. Because the mechanical properties of the thermoplastic or thermoset materials used to form the articles are very close to those of conventional engineering plastics, they can be used in an extremely wide variety of applications including, but not limited to enclosures for consumer electronics devices, mechanical components for prototype or short- run machinery, tooling and fixturing, and medical modeling.

## APPARATUS

Another embodiment features an apparatus for the production of three-dimensional objects, comprising:

a) a means for applying a layer of dry particulate material to a platform or to a prior layer of particulate material,

b) a means for applying one or more absorbers to one or more selected regions of the layer of particulate material,

c) a means for generating electromagnetic energy that spatially incoherent (i.e., unfocused and uncollimated), polychromatic, or phase-incoherent or optionally a source for electromagnetic induction heating,

d) optionally a means for cooling or otherwise controlling the temperature of the regions that receive the electromagnetic or induction energy, or are directly adjacent to such regions, and

e) optionally a computer algorithm for calculating the necessary dosages of energy, absorber, and cooling prior to performance of the process and adjusting these parameters during the

build process.

The present apparatus may be used for layer-by-layer production of three-dimensional objects. The particulate build material may be applied to an operating platform or to a previous layer of treated or untreated build material. The means for applying the build material and/or the absorber, include, but are not limited to, an apparatus that moves along a plane coplanar to the plane defined by the layer of build material, and preferably in a vertical and/or horizontal plane. In one embodiment, the movable apparatus consists, in part, of an operating platform. In a preferred embodiment, the movable apparatus is present on an operating platform, and is movable coplanar to a plane defined by the layer of build material. In another preferred embodiment, the movable apparatus is movable coplanar to a plane for the application of the absorber(s) to selected regions of a layer of build material, which defines the plane.

The absorber is preferably applied using an apparatus movable coplanar to a plane defined by the substrate layer. The apparatus is capable of transferring liquid and/or dry granular absorbers at defined sites on the layer provided in step a. By way of example, the apparatus may consist of a printing head, such as that used in an inkjet printer. The apparatus may also contain a guide for positioning the printing head, such as that used to guide the printing head in an inkjet printer; the positioning of the printing head may likewise take place in similar fashion to the positioning of the printing head of an inkjet printer. Using such an apparatus, the absorber is applied at those sites on the layer provided in step a, where the substrate is to be bonded, for example by sintering or fusion.

In an embodiment, the radiation for the described treatment may be generated by an energy source that emits electromagnetic radiation in the range from 100 nm to 1mm, or by a mechanism that supplies an oscillating magnetic field for electromagnetic induction. Because each cross section of the three-dimensional object is generated by the mechanism that deposits the absorber, the radiation need not be distributed in any particular geometric form or coherence. The form of the energy source may be spot form or linear form or else spread form. It is also possible to combine two or more energy sources to permit irradiation of a relatively large area in a single step.

Introduction of energy in linear form or in spread form may be advantageous because the selectivity is intrinsically provided for each layer by way of the absorber or, respectively, absorber-containing liquid applied selectively via an inkjet process. This accelerates the process. Optionally, energy may be delivered by electromagnetic induction by way of an oscillating magnetic field applied to the build box. In this embodiment, energy is applied to a thick shell encompassing the outside surface of the part, and may penetrate entirely through certain thinner geometries.

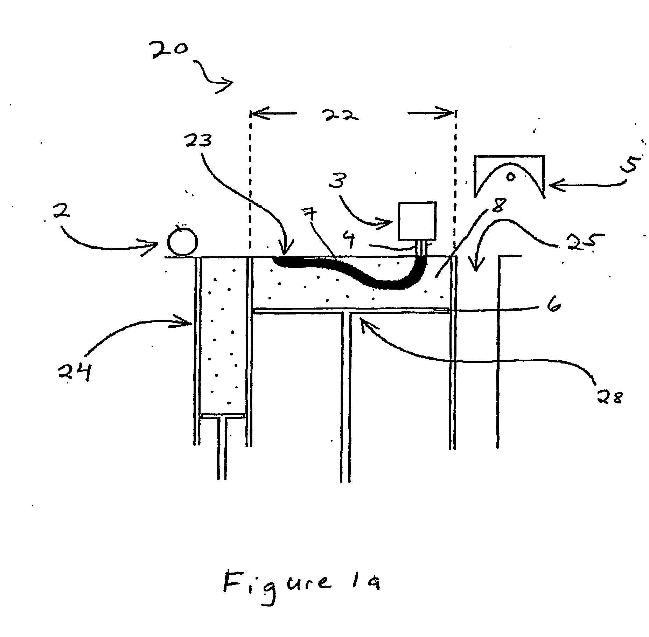

Referring to Figures 1a - 1b, the present process is preferably carried out in an inventive apparatus for the layer-by-layer production of three-dimensional objects, which includes:

- a movable component for the layer-by-layer application of a dry particulate material on an operating platform or to a layer of a treated or untreated particulate material which may at this stage be present on the operating platform,

- a stage movable in the x, y plane, for the application of a material including an absorber and optionally of other additives to selected regions of the layer composed of the particulate material, and

- a source of electromagnetic energy that may be spatially incoherent (i.e., unfocused and uncollimated), polychromatic, or phase-incoherent, using an unfocused laser of wavelength from 100 nm to 1mm; radiant heaters or emission lamps applying radiation comprising visible (400 nm - 750 nm), IR-A (750 nm - 1400 nm) or IR-B (1400 - 5000 nm) radiation, or a source of electromagnetic induction energy operating in a frequency range between 5 kHz to 60 MHz, with a preferred frequency of 13.5 MHz.

In an embodiment, a movable operating platform may also be responsible for movements of the apparatus and, respectively, of the energy source, and of the operating platform relative to one another. It is also possible to use the operating platform to realize the relative movement in the x direction and to use the respective apparatus or, respectively, the energy source to realize the movements in the y direction, or vice versa.

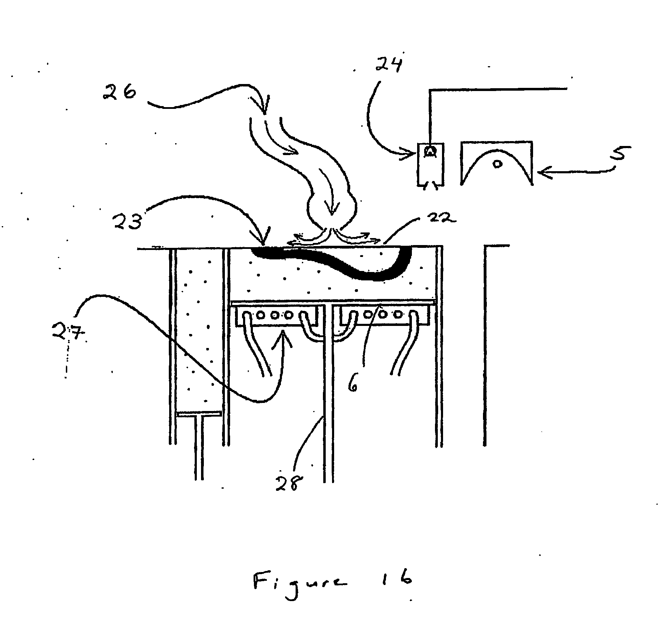

An embodiment of the present process and the present apparatus are illustrated in Figure 1. In the present apparatus, untreated particulate build material, which has previously been charged to a feed vessel, is built up on a movable base 6 to give a matrix 8. A device for distributing layers of build material, such as a doctor blade or counterrotating spreading mechanism 2 is used to move a portion of the build material across the movable base and distribute a thin film of the particulate build material over the movable base or over the previously applied layers. The absorber 4 is applied to selected regions of the layer composed of build material, by way of an apparatus 3 movable in the x, y plane. After each treatment with an absorber, a fresh layer of the build material is applied. The sites on the applied substrate which have been treated with the absorber are bonded by means of introduced energy of wavelength from 100 nm to 1 mm, for example, via a heating device 5, e.g., a radiative heater or a lamp, to give a three-dimensional object, i.e., an article 7. This step can also take place before the application of the subsequent layer of dry particulate build material.

Preferably, a spread layer of build material is of uniform height. The height of the layer provided by the spreading mechanism is preferably less than about 3 mm, more preferably from about 30 to about 2000 micrometers, and most preferably from about 80 to about 200 micrometers. The height of each layer may determine the resolution, and, therefore, the smoothness of the external structure of the three-dimensional object produced. The base plate, or else the apparatus or support for providing the layer, may be designed with an adjustable height feature so that after the patterning and/or subsequent heat-treatment of a given layer has been carried out, either the resultant layer can be lowered by an amount equal to the height of the layer to be applied next, or the apparatus can be raised by an amount equal to the difference in height of the next layer over the preceding layer.

Build area 22 coincides with a region 23 within which absorber is deposited by movable stage 3, e.g., a printhead and where the article is constructed. Three systems that operate over this build area 22 are the printing apparatus 3 (represented here by the printhead only, for clarity); a heating apparatus 5 (represented here as a radiant heater with reflector, by way of example only); and the spreading roller, or "counter" roller 2 that moves dry, free- flowing particulate build material from a source 24, across the build area 22 to form a thin layer of dry, untreated build material prior to the printing operation. Excess build material passes down an overflow chute 25 into a collection area (not shown). The article 7 under construction is shown here partially defined, with the absorber-treated regions shown in black. This portion of the article is partly buried in untreated build material, and is supported by a build piston 28.

In many rapid-prototyping processes, the three-dimensional object is built up layer-by-layer. Many methods are based on the fixation or bonding of regions of liquid layers (stereolithography) or flowable particulate layers (laser sintering), within a layer or among layers situated thereunder. Bonding is achieved by supplying energy to these selected regions of the respective layers using a focused, directed source that defines the affected regions by imaging the energy delivery. Those regions of the layers to which no energy is introduced remain flowable. A three-dimensional object is obtained layer-by-layer via repetition of the particular application and bonding or fixing of the particulate material or liquid. Removal of the unconverted particulate material or of the unconverted liquid gives a three-dimensional object, the resolution of which (in relation to the outlines) depends on the layer thickness and on the particulate grain size.

The embodiments circumvent difficulties encountered in the present rapid prototyping technologies in a few ways. First, by using a non-oriented and/or non-monochromatic and/or non-coherent energy source, a more economical energy source can be utilized in place of amore expensive laser source with accompanying optics. Second, the use of inkjet technology in the preferred embodiment greatly accelerates the rate at which features on a printed article can be defined. Whereas a laser-based rapid prototyping system uses a single forming tool that typically travels over the entire surface area of a given layer, an inkjet system can use several hundred forming tools, all operating in parallel.

In more conventional inkjet-based three dimensional printing, exemplified by U.S. Patents 5,204,055 and 6,007,318 the combination of dry particulate build material and printed fluid forms a solid article by a direct reaction between the fluid and the particulate: in some cases the fluid contains adhesives that particles of build material, and in other cases, the fluid activates chemical species contained in the build material that cause the article to solidify. In all cases, the solvent action of the printed fluid plays a key role in the solidification mechanism. This imposes a limitation on the variety of materials that can be manipulated in the process because the fluid is preferably simultaneously be compatible with the printing apparatus and be capable of activating the solidification of the build material.

The chemical nature of the fluid is relevant only to the printing operation: it is preferably compatible with the printing apparatus and the desired colorants or absorbers, but it need not participate directly in the bonding of the build material. The stimulation for bonding bond the build material may provided by the heat developed by the absorber. While absorbers are preferably chosen to be compatible with the fluid, these may be engineered in the same manner as pigments, and therefore they fall within the same province as the overall print head compatibility that is preferred in the fluid.

In an embodiment, a process introduces energy to the build material to be melted, sintered or otherwise bonded by way of an absorber that absorbs the energy and transfers it in the form of heat to the particulate build material surrounding the absorber. The present process forms a pattern in untreated material through the deposition of the absorber, delivered by an imaging process, and introduces the energy from a source of radiation that need not be focused or spatially coherent. The energy is absorbed by the absorber, converted into heat, and transferred to contiguous build material that is incapable of directly absorbing sufficient radiation to bond together. In this context, the phrase "incapable of directly absorbing sufficient radiation to bond together" means either that the aforementioned radiation does not heat the build material sufficiently to bond it by melting or sintering or by thermally activated chemical reaction to adjacent particles of build material, or that the time needed for this bonding is excessive. By contrast, the heat transferred from the absorber is sufficient to bond material adjacent to the absorber by melting or sintering, or by activating a thermochemical bonding reaction and also to melt or sinter or bond material to the absorber. The present process can thus produce three-dimensional objects via the melting, sintering and bonding of a granular material. The functional principle of granular-based rapid prototyping may be found, for example, in U.S. Patent No. 6,136,948 and PCT Publication No. WO 96/06881.

The absorber may be applied selectively by using computer-controlled applications such as CAD applications used to calculate cross sections. The absorber(s) may be applied only to those regions of the build material within the cross section of the three- dimensional object to be produced. A printing head apparatus equipped with nozzles can be used for the application of the absorber(s). Optionally, absorbers may be deposited by an electrostatic image-transfer process similar to that used in desktop laser printers. Once the radiation step has been concluded for the final layer, the present process results in a matrix that contains in part, melted, sintered or otherwise bound build material. This matrix forms the solid three-dimensional object once the unbound granular material has been removed.

Referring to Figure 1b, apparatus 20 may include one or more types of temperature controllers. For example, a non-contact thermometer 24 may be used to monitor a temperature of the build area 22. A software algorithm (not shown) may respond to the thermometer 24 to control temperature-controlling methods. A cooling mechanism 26 may flow air over a powder surface to cool build area 22. Moreover, a heat-transfer surface 27 may be disposed within the build box in which the build material is disposed; the heat-transfer surface 27 may be attached to the build piston 28, i.e., on movable base 6.

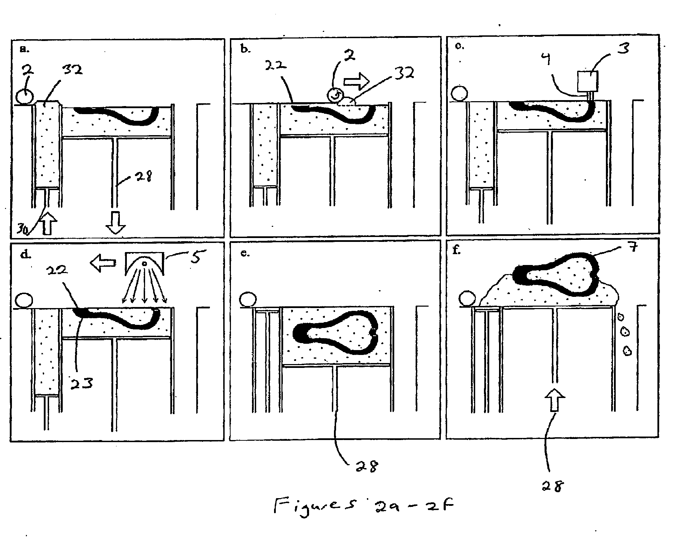

Referring to Figures 2a-2f, a basic cycle of an embodiment of the process is illustrated in detail, starting with the spreading operation.

Referring to Figure 2a, the build piston 28 is lowered, creating space for spreading a layer of build material. A piston 30 in the build material source is raised by an amount that pushes a preferred volume of dry, particulate build material 32 into a space in front of the spreading, or "counter" roller 2.

Referring to Figure 2b, the spreading roller 2 travels across the build area 22 pushing a bead of build material 32 in front of it, and drawing a thin layer of build material beneath, into the space on an upper surface of the build area 22. The rotation of the "counter" roller 2 is typically counter to the direction of rolling along the build surface.

Referring to Figure 2c, the printing apparatus 3 deposits a layer of absorber 4 in regions of the build material coinciding with a cross-section of the article to be built.

Referring to Figure 2d, the heating device 5 is activated and applies energy to the build area 22. A radiant heater is shown for purposes of illustration only. Absorber-treated regions 23 of the build material become heated, causing thermoplastic or thermoset particulates in the layer to melt, sinter, or otherwise bond to particles of filler that may also contained in the build material.

Following this step, the cycle resumes as illustrated in Figure 2a and is repeated until the article 7 is complete, immersed in untreated build material, and supported by the build piston 28, as shown in Figure 2e.

Referring to Figure 2f, the build piston 28 is raised, and the article 7 is removed from the untreated build material.

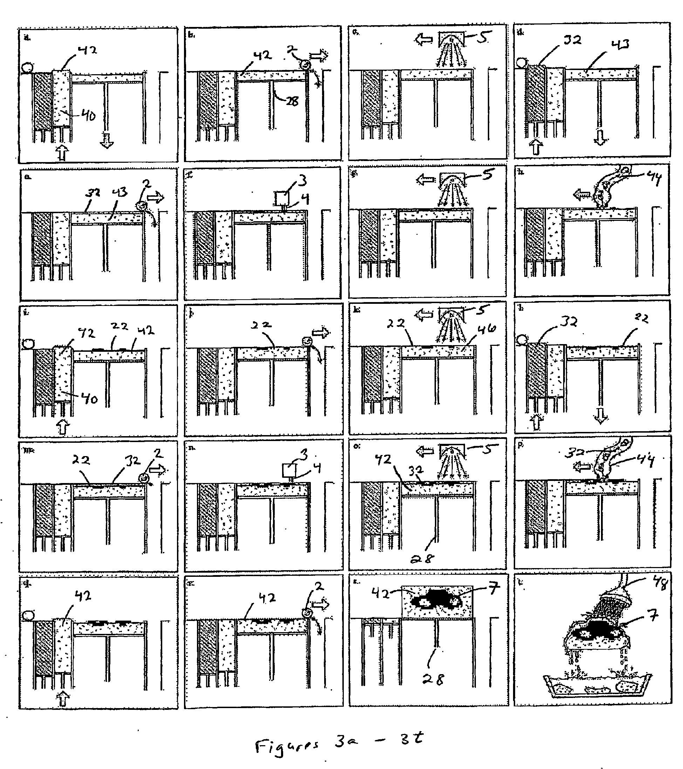

Referring to Figures 3a - 3t, in an embodiment, a process cycle incorporates the use of different build materials from different sources for the fabrication of a three-dimensional article 7. The components of the apparatus are similar to those discussed in the previous illustration, with the addition of a second source 40 of dry particulate material used as a support material 42 outside of the regions to be formed into the article.

Referring to Figures 3a-3c, the particulate support material 42 is deposited onto build piston 28, and spreading roller 2 travels across the build area 22, forming a layer of support material 42. The layer of particulate support material 42 is sintered by the heating device 5 into a base layer 43 of bonded material that serves as a solid substrate for melting or sintering the build material 32 in subsequent steps. The support material 42 is chosen such that it absorbs radiation from the energy source with no additional absorber. This permits it to fill regions where absorber has not been deposited.

Referring to Figures 3d - 3g, the particulate build material 32 is deposited, treated with absorber and irradiated, analogously to the steps illustrated in Figures 2a - 2d. In particular, a layer of build material 32 is spread over the base layer 43 by the spreading roller 2. The printing apparatus 3 deposits a layer of absorber 4 in regions of the build material 32 coinciding with a cross-section of the article to be built. The heating device 5 is activated and applies energy to the build area. Absorber-treated regions 23 of the build material become heated, causing thermoplastic or thermoset particulates in the layer to melt, sinter, or otherwise bond to particles of filler that may also contained in the build material 32.

Referring to Figure 3h, the untreated build material 32 that has not been made absorbing to the energy source is removed. A vacuum nozzle 44 is shown by way of example. In this embodiment untreated particulate build does not become melted, sintered or otherwise bonded when exposed to the energy source; rather, it is the presence of the absorber in the treated regions that bonds the build material to the solid substrate and renders those regions substantially immune to the particulate removal operation.

Referring to Figures 3i - 3k, the particulate support material 42 is raised from the supply, spread over the build area 22, and treated by the energy source 5. Because the treated regions of build material stand out in relief in the build area 22, little or no support material 42 is deposited in regions occupied by treated build material. The support material 42 occupies all regions not filled by treated build material. The effect is to create a support structure 46 or substrate that entirely encloses the article 7 and renews the solid substrate on the build plane over regions not occupied by build material.

Referring to Figures 3l - 3o, the build material 32 is spread over the build area 22, treated and sintered in another cycle equivalent to the cycle illustrated in Figures 3d-3g. In particular, after a layer of build material 32 is spread over the base layer 43 by the spreading roller 2, the printing apparatus 3 deposits a layer of absorber 4 in regions of the build material 32 coinciding with a cross-section of the article to be built. The heating device 5 is activated and applies energy to the build area. Absorber-treated regions 23 of the build material become heated, causing thermoplastic or thermoset particulates in the layer to melt, sinter, or otherwise bond to particles of filler that may also contained in the build material 32.

The build material 32 covers the entire build plane 22 and is supported everywhere by either the support material 42 or treated build material 32 from the previous layer. Treatment with absorber 4 occurs in another cross-section, coinciding with a slice of the article 7 being built. When the energy source 5 is activated, treated build material 32 melts, sinters, or otherwise bonds to the underlying substrate. Where the treated build material contacts the previous layer of treated build material, the treated layer bonds to the previous layer. The build material 32 forms a temporary bond to the support material in those regions where the treated build material contacts the support material. This temporary bond resists the tendency of the treated material to contract under capillary attraction or to curl up, and it facilitates the conduction of heat through the lower surface of the build piston 28 by way of the continuous sintered particulate support network physically attached to the build piston 28.

Referring to Figure 3p, the untreated build material 32 from this second layer is removed, e.g. by suction.

Referring to Figures 3q-3r, a subsequent layer of support material 42 is spread over the second layer. In a heating step (not shown) the support material is sintered down, in a repeat of steps illustrated in Figures 3i-3k

Referring to Figure 3s, the finished article 7 is lifted by the build piston 28 from the build area 22. The sintered support material 42 is shown as a solid brick or loaf entirely surrounding the article 7.

Referring to Figure 3t, the support material 42 is removed from the surface of the article 7. By way of example only, the support material is shown being dissolved by a solvent, e.g. water or alcohol, by a spraying apparatus 48. To render embodiments more environmentally suitable, an inexpensive nontoxic water-soluble particulate support material such as sucrose may be utilized in the process.

In this illustration of the process, the use of two granular materials may be regarded as an example of a more general embodiment that utilizes several independent particulate supplies, only one of which need be considered a "support" material. Several independent supplies of particulate build materials, each with different physical properties may be layered, treated, and removed in sequence by repeating steps illustrated in Figures 3e-3h in series for each independent build material to be utilized. Further, it is not necessary to utilize every instance of build material on every layer in the build. By this method, a composite article may be constructed comprising different materials in different regions of its structure.

## RADIATION AND ENERGY DELIVERY

The means for generating the electromagnetic radiation for the processes disclosed herein include, but are not limited to, a source of electromagnetic energy that may be spatially incoherent (i.e., unfocused and uncollimated), polychromatic, or phase-incoherent, using an unfocused laser of wavelength from 100 nm to 1 mm; radiant heaters or emission lamps applying radiation comprising visible (400 nm - 750 nm), IR-A (750 nm - 1400 nm) or IR-B (1400 - 5000 nm) radiation, or a source of electromagnetic induction energy operating in a frequency range between 5 kHz to 60 MHz, with a preferred frequency of 13.5 MHz, or a chemical species present in the build material that reacts with a printed fluid and spontaneously generates heat by chemical reaction.

The present process has the advantage of not requiring the use of complicated directed radiation, such as narrowly focused laser radiation or narrowly focused microwave radiation. The controlled exposure of certain locations of one or more layers of build material to the electromagnetic radiation may be achieved via the excitation of the absorber(s) by electromagnetic radiation, the absorber(s) being applied to the desired regions of the layer or of the layers of the build material.

The present process includes a simple way of permitting a layer-by-layer automated build up of a three-dimensional object, using electromagnetic radiation in combination with one or more suitable absorbers. The build material not treated with absorber may readily be reused, which is in contrast to processes that use inhibitors.

Suitable types of radiative heat sources may include lasers, especially low-cost diode lasers; incandescent lamps, especially tungsten-halogen heat lamps, nichrome, kanthal, or silicon carbide resistive heating elements; or high-pressure emission lamps such as sodium- vapor or xenon. Heat sources of these types are well-known as sources of industrial heating and are familiar to those versed in the art. Several of these heat sources, particularly the lamps or resistive heaters may be particularly efficient if they are combined with reflective concentrators. Linear elements may be provided with linear-parabolic or linear-ellipsoidal reflectors and cylindrical lenses to concentrate the radiation. Since diode lasers are essentially point sources of directed radiation, focusing optics may be unnecessary if the source can be placed sufficiently close to the patterned absorbers.

*Induction Heating*

Besides the direct application of spatially incoherent (i.e., unfocused and uncollimated), polychromatic, or phase-incoherent electromagnetic radiation, the above method also allows the possibility of applying heat to treated materials through electromagnetic induction. In this process, an oscillating magnetic field is applied to the region containing the object to be treated. This field induces an electric current in materials that are disposed to react with that field, and the material becomes heated through the ohmic dissipation of the induced electric current. An absorbing substance is often referred to as a "susceptor" in induction heating, but for purposes of consistency, the term "absorber" is used herein for process discussions where either induction heating or direct radiant heating may be used. Generally, absorbers that are compatible with this process include materials that are good electric conductors, however substances that resonate at a particular frequency may be used so long as the magnetic field is tuned to match.

Electromagnetic induction has been used in industry for a very long time, particularly in the foundry industry for melting reactive metals in an inert atmosphere. More recently, electromagnetic induction has become incorporated into home cooking stoves, and are currently available from manufacturers, Jenn-Air, Kenmore, G.E., and Brandt.

The heating apparatus in an induction heater typically consists of a coil of metal in close proximity to the volume of application and a supply of high-frequency alternating current that creates the oscillating magnetic field. The frequency of the field can vary from 5 kHz to 60 MHz, with a preferred frequency of 13.5 MHz. The coil can optionally be adapted to be cooled by fabricating it from a hollow metallic tube and passing cooling water through it.

Like microwave heating, energy is absorbed in a thick shell surrounding the outside surface of the part. Both microwave and induction heating may be subject to lack of temperature control in parts that have large variation in section thickness. PCT Publication WO 2004/048463 A1 includes an extensive discussion of modes by which microwave heating, and by extension, induction heating, may produce non-uniform heating in freeform plastic parts. Energy is absorbed in bulk regions, and less so in thin sections. Additionally, cooling occurs at the parts surface, so the temperature tends to be lowest on the outside surface of the part. For these reasons, microwave and induction heating are somewhat less preferred than direct infrared heating of many thin layers in sequence, as described herein.

*Chemical Sintering*

One embodiment includes an alternative to externally applied energy. Instead, chemical energy is derived reactive components in the printed liquid and/or in the particulate build material. If one of the components of the build material releases heat when it is contacted by the printed liquid, i.e., by an exothermal dissolution of an anhydrous ingredient on contact with a water-based printed fluid, the increased temperature in the immediate vicinity of the fluid pattern may promote melting and/or sintering of other components present in the build material. Another alternative includes a combination of two reactants in the build material, whose exothermal reaction is initiated or supported by the presence of the printed fluid. An example of two reactive particulate materials is a combination of an acid and an alkali. Many chemicals in these categories are available as free-flowing particulates, and they may be combined in the dry state without any significant reaction occurring until moisture is added to bring the reactants together. On the application of liquid water, one of the ingredients (the acid, for example) may dissolve, and react with the other ingredient (that need not dissolve: the alkali, in this example) to form a salt by their combination, releasing chemical energy and causing the materials in the vicinity to warm up. The heat supplied by these mechanisms may be sufficient to melt, sinter, or otherwise bond by a thermally activated chemical reaction, structural precursors also present in the build material. This process differs slightly from the previously mentioned process because the heat required for bonding is supplied spontaneously and locally, rather than being directed by a broadly applied external source.

It may be advantageous to heat the layers to be sintered to an elevated temperature, via introduction of bulk heating of the build chamber. It may also be advantageous to keep the layers at an elevated temperature, this temperature being below the melting or sintering point of the polymer used. This method can reduce the amount of electromagnetic or chemical energy needed for the melting or sintering process. A precondition for this is the presence of a temperature-controlled construction space that also reduces the likelihood of curl-up of the corners and edges of the patterned layers that can make it difficult to spread a smooth layer of loose build material over previously printed regions. It may also be advantageous for the absorber or the absorber-containing liquid to be preheated.

*Cooling and Energy Dissipation*

To better control the application and disposal of energy in the build process, a cooling device may be incorporated into a surface surrounding the build chamber, for example, in the build piston, to carry heat away from the build chamber. This device may be a build plate with an embedded cooling channel that carries a fluid heat-transfer medium in communication with an external heat exchanger; a heat exchanger in close thermal contact with the build plate and cooled by airflow; or a solid-state thermoelectric (Peltier) device that extracts heat from the build plate and conducts it into an external heat sink. This device may alleviate the buildup of heat in the deeper portions of the build that may have already become sufficiently well bonded, but still contain absorber and can still potentially become heated by the energy source.

Such a mechanism may require the presence of a support structure in the build area beneath the part whose structure facilitates heat conduction from the part to the cooling device across the volume of particulate material that separates them.

In another embodiment of a thermal control system, a cooling device may be built onto the moving apparatus that dispenses the absorber. Such a cooling device may consist of a forced-air nozzle, either drawing a vacuum or pushing cooled air towards the build area.

In another embodiment of a thermal control system, a substance may be incorporated into the particulate build material that changes in phase (e.g., by melting or evaporation) at a temperature that is particularly beneficial to the process. In one embodiment, this may be a temperature slightly higher than the sintering temperature of a thermoplastic component in the build material. In this embodiment, the phase change material prevents the temperature from rising too quickly above the required temperature and prevents overheating of the build material during irradiation. In another embodiment, the phase change occurs at a temperature somewhat below the sintering temperature of the build material. This retards the bonding of the build material until a certain threshold dosage of radiation has been absorbed. The method may be used to prevent material adjacent to absorber-treated regions from sintering due to heat conduction away from the absorber-treated regions.

### Methods for Forming Layer Patterns of Absorber on the Substrate

The method by which an absorber is deposited on the surface of the build material may vary, but a preferred method is to deposit it by inkjet printing of absorber in a liquid carrier. In this embodiment, the process represents an improvement over an early three- dimensional printing technique described in U.S. Pat. No. 5,204,055. That reference describes the use of an inkjet style printing head to deliver a liquid or colloidal binder material to sequentially applied layers of dry particulate material. The three-dimensional inkjet printing technique or liquid binder method involves applying a layer of a particulate material to a build surface using a counter-roller. After the particulate build material is applied to the build area, the inkjet printhead delivers a liquid binder in a predetermined pattern to the layer of build material. The binder infiltrates into gaps between grains in the build material and hardens to bond the build material into a solidified layer. In subsequent improvements, certain components are incorporated into the build material that participate in chemical reactions activated by the liquid binder, the binder serving more as a reaction medium than an actual adhesive in itself. These improvements are disclosed in U.S. Patent No. 5,902,441, U.S. Patent No. 6,610,429, European Patent No. EP 1226019 BI, U.S. Patent Publication Number 2004/0056378 AI, and U.S. Patent Publication Number 2005/0003189. In certain embodiments the liquid binder acts as an absorber or a carrier for the absorber, and the primary mode of solidification is by the action of heat transferred from the absorber to adjacent grains of particulate build material. Additionally, the liquid carrier may exhibit some functionality as a "binder," i.e., some solvent or chemical activity towards components in the build material, and facilitate hardening by a secondary bonding mechanism such as dissolution of soluble polymeric adhesives. The bound build material also bonds each layer to the previous layer. After the first cross-sectional portion is formed, the previous steps are repeated, building successive cross-sectional portions until the final article is formed.

As used herein, the term "build surface" refers to the exposed surface, usually flat, planar and facing upwards, of the volume within which three-dimensional parts are built in a 3D Printer. This surface coincides with the plane of spreading of the particulate build material, and it coincides with the substrate plane upon which patterns of absorber are deposited. In embodiments the mechanism that deposits the absorber travels mostly in a plane parallel to the build surface, displaced a short distance vertically, with optional small relative movement along a line that connects the two surfaces. This relative movement may be caused by motion of the deposition mechanism towards the build surface, or by motion of the platform that supports the build surface in the direction towards the deposition mechanism.

As used herein, the term "counter-roller" refers to a particularly preferred mechanism for spreading a thin film of particulate build material over a surface. In an embodiment the surface is the "build surface" of a 3D Printer. The mechanism acts by pushing a bead of free-flowing dry particulate build material in front of a cylindrical roller (the counter-roller) that rotates counter to the direction of its motion. The advancing surface of the roller tends to lift unused build material and cause it to tumble in a wave that is pushed along by the roller. This method provides a relatively smooth, thin layer of build material across a wide range of mechanical properties of build materials. These mechanical properties are discussed elsewhere in this document. The use of a counter-roller is quite well established in freeform fabrication; examples of its use are described in U.S. Patent No 5,053,090 as well as in U.S. Patent No. 5,204,055.

As used herein, the term "binder" refers to a fluid component that is deposited by one of the various methods described in the various embodiments that either possesses an adhesive component in solution or suspension; or it is capable of activating an adhesion or some other solidification phenomenon by virtue of its solvent properties or its chemical nature. This is distinguished from the term "carrier" which is used herein to describe a fluid component that is deposited by one of the various methods in the various embodiments that does not possess the capacity, in itself, to cause any adhesion between grains of particulate build material in the build area. A carrier may be used to deliver an absorber to the build material, either in suspension of in solution, with the absorber supplying the heat necessary to cause bonding between grains of build material.

In another embodiment the absorber may be deposited in a liquid slurry under steady pressure through a nozzle that is translated over the build surface. This is similar to an extrusion process that is not necessarily capable of the same switching speed or resolution as an inkjet printhead. In a preferred embodiment, there is one nozzle per species of absorber, and with each nozzle being translated in a plane parallel to the build surface in a path that conforms to the contours of the layer. This is distinct from the motion of a multiple-nozzle inkjet printhead, which is most preferably passed over the build surface in a raster pattern. In this embodiment, an absorber fluid is a very viscous, highly loaded liquid or gel that may be desirable in some applications. These may include the fabrication of ceramic or metal parts in which a specialized absorber is preferably compatible with high processing temperatures and contribute a significant fraction of solids to avoid porosity in the completed part, or if a preferred material cannot be milled to a fine enough particle size (below 1 $\mu$m) to be suspended in a carrier for inkjet printing. Such materials include reactive metals such as aluminum, magnesium, and titanium.

In another embodiment the absorber is deposited electrostatically by means of a photoconductive plate as used in conventional laser printers. A similar process has been disclosed in U.S. Patent No. 6,531,086. In the aforementioned patent, an opaque mask is created using an electro-photographic process, and the build surface is irradiated through the mask. The radiation is projected into an image of a cross-section of a desired model, and the particulate build material strongly absorbs the radiation. This approach typically requires the use of a collimated (spatially coherent) radiation source, unlike embodiments described herein.

In the first step of the present embodiment a photoconductive plate (or cylinder) is charged by an electrostatic discharge. The image of a cross-section of a layer is projected onto the surface of the charged photoconductor by an optical system, or it is written digitally by a switched laser beam. Points where the light strikes the photoconductor become neutralized, creating a "latent" image of charged areas on the plate or drum. Dry particulate absorber is then dusted onto the surface of the plate. The absorber is formulated such that it adheres to the charged surface of the plate, but falls off the uncharged surface. A layer of loose build material is spread over the build surface and the photoconductive plate is translated over the build surface and fully discharged, causing the electrostatically held particles of absorber to detach from the plate and fall onto the build area. The photoconductive plate is removed from the build area and the absorber is irradiated by an unfocused, spatially incoherent source of electromagnetic radiation, causing the build material to melt or sinter to form a solid layer. A second layer of build material is spread over the build area to form a substrate for the next layer of absorber, and the photoconductor is re-charged to receive the image of the next layer.

In still another embodiment free-flowing particulate build material is spread onto the build surface and the absorber is deposited onto the build surface through a stencil in an aerosol or otherwise by spraying, or squeezed through a silkscreen as a paste or gel. Each different pattern for a layer is typically fabricated separately as a different stencil or screen. While such a process may not be economically feasible for small runs of freeform parts, it may become very economical for large-scale production of freeform parts or short-run production of parts with simple geometries. A process analogous to the liquid binder process disclosed in U.S. Pat. No. 5,204,055, but using stencils, is described in U.S. Pat. No. 5,940,674. In the present embodiment, the pattern is formed by application of an absorber, rather than by application of an adhesive binder.

### Liquid Carrier or Binder

In another aspect, the invention features a fluid for three-dimensional printing, the fluid including a first solvent having a first boiling point, and a second solvent having a second boiling pbint. The fluid may include water. The first solvent may be water-miscible. The second solvent may be water-miscible. The second solvent may have a second boiling point that is higher than the first boiling point. The fluid may also include a surfactant, a rheology modifier, and/or an amine. The fluid is adapted to carry an absorber material, either in suspension or in solution, or it may be an absorber in itself. Further, the fluid may be adapted to activate an adhesive in a particulate build material comprising a blend of a thermoplastic or thermoset particulate material in combination with an adhesive particulate material, or may participate in a chemical reaction with reactive components in the build material to facilitate hardening of the structure.

Many aspects of the fluid have already been disclosed in a previous application, in particular U.S. Patent Publication No. 2005/0003189. The inventive aspect of the fluid disclosed herein is in the adaptation for carrying an absorber material into the printed regions of the build material, and subsequently irradiating or applying electromagnetic induction to the build area to stimulate either melting or sintering of thermoplastic or thermoset components contained in the build material.

***Absorber Materials***

Absorbers (first absorber and/or second absorber) that may be used in the present kit are any of those which are heated by electromagnetic radiation of wavelength from 100 nm to 1 mm. In an embodiment, the absorbers are any that are heated by electromagnetic induction in a frequency range between 5 kHz to 60 MHz, with a preferred frequency of 13.5 MHz.

However, the absorbent action of an absorber may increased by including additives. For example, additives may be flame retardants based on melamine cyanurate (MELAPUR from DSM) or based on phosphorus, preferably phosphates, phosphites, phosphonites or elemental red phosphorus.

An absorber system disclosed in WO 2004/048463 Al is specifically directed to thermoplastic polyolefins, and is compatible for use in the kit. This absorber system includes a combination of a metallic pigment in combination with a tertiary amine or phosphine. At least one of these components is typically adapted to inkjet printing or another of the above-referenced deposition processes, while the other component may be blended directly into the particulate build material. While recent developments have resulted in metallic pigments in inkjet inks, it is more likely that the component to be deposited may be the amine or phosphine, since these are generally soluble in some solvent that can be used as a carrier.

The absorber present in the build material preferably includes a principal component of copper hydroxide phosphate (CHP), or animal charcoal, carbon fibers, graphite or interference pigments.

CHP may be used in the form of a pale green, fine crystalline particulate material whose median grain diameter is just 3 $\mu$m. Suitable CHP may be, for example, VESTODUR FP-LAS from Degussa.

Animal charcoal is an inorganic black pigment comprising elemental carbon. It is composed of from 70 to 90% of calcium phosphate and from 30 to 10% of carbon. Density is typically from 2.3 to 2.8 g/ml.

Interference pigments are also referred to as pearlescent pigments. Using the natural mineral mica as a basis, they are encapsulated with a thin layer composed of metal oxides, such as titanium dioxide and/or iron oxide, and are available with a median grain size distribution of from 1 to 60 $\mu$m. By way of example, interference pigments are supplied by Merck with the name Iriodin. The Iriodin product line encompasses pearlescent pigments and metal-oxide-coated mica pigments, and also the subclasses of: interference pigments, metallic-cluster special-effect pigments (iron oxide coating on the mica core), silvery white special-effect pigments, gold-luster special-effect pigments (mica core coated with titanium dioxide and with iron oxide). The use of Iriodin grades in the Iriodin LS series is particularly preferred, namely Iriodin LS 820, Iriodin LS 825, Iriodin LS 830, Iriodin LS 835, and Iriodin LS 850. The use of Iriodin LS 820 and Iriodin LS 825 is most particularly preferable.

Other suitable materials for use as pigments are: mica or mica pigments, titanium dioxide, kaolin, organic and inorganic color pigments, antimony (III) oxide, metal pigments, pigments based on bismuth oxycholoride (e.g. the Biflair series from Merck, high- luster pigment), indium tin oxide (nano-ITO powder from Nanogate Technologies GmbH or AdNano$^{tm}$ ITO from Degussa), AdNano$^{tm}$ zinc oxide (Degussa), lanthanum hexachloride, ClearWeld® (disclosed in WO 0238677), and also commercially available flame retardants that include melamine cyanurate or include phosphorus, preferably including phosphates, phosphates, phosphonites, or elemental (red) phosphorus.

Many of the pigments mentioned in the preceding paragraphs are not available for inkjet printing formulations. Accordingly, their use may be restricted to one of the other embodiments listed above that do not require a finely dispersed colloid or a solution in a carrier liquid. These may include, for example, the slurry deposition process or the dry electro-photographic process.

If the intention is to avoid any adverse effect on the intrinsic color of the model, the absorber preferably comprises interference pigments, particularly preferably from the Iriodin LS series from Merck, or Clearweld®.

The absorbers may, by way of example, be in pellet form, particulate form, or liquid form. For distribution within a printing head with one or more fine nozzles it is advantageous for the particles to be especially fine, and therefore excessively coarse particles or pellets may be milled or further milled, preferably at low temperatures, and then optionally classified.

Absorbers include, but are not limited to, particulate substances, e.g., metal powders, metal compounds, graphite or activated charcoal. In certain embodiments, the fluid deposited on the build surface might constitute the absorber. The deposited fluid may be water or protic liquids such as saturated mono- or polyhydric linear, branched, or cyclic aliphatic alcohols, or mixtures thereof, each undiluted, or mixed with water. Preferred protic liquids include glycerol, trimethylolpropane, ethylene glycol, diethylene glycol, butanediol, or mixtures thereof, each undiluted, or mixed with water. Other examples include polar organic compounds such as amines, phosphines, glycols, polyglycols, and polyelectrolyes. It is also possible to use a mixture of absorbers, containing one or more liquid absorbers, one or more solid absorbers, or combinations of liquid and solid absorbers. It may also be advantageous to suspend solid absorbers in liquid carriers that are not absorbers, in order to achieve better distribution of the solid absorbers over the entire depth of the substrate layer provided. The absorber, in particular a liquid absorber, may also be equipped with surfactants for better wetting of the substrate. The choice of a liquid absorber depends upon the absorption characteristics of the liquid as compared to the spectrum of radiation projected by the source. For example, water absorbs infrared light very strongly in a broad range of wavelengths starting from a minimum around 1000 nm.

*Absorbers for induction heating*

In one embodiment of this invention, energy is applied to the build material as a high-frequency oscillating magnetic field, and absorbers are materials that react to this magnetic field such that they are heated through electromagnetic induction. An absorber, as used herein, denotes an ingredient that heats sufficiently to melt or sinter or activate a chemical bonding reaction between the structural components of the build material when exposed to electromagnetic radiation or electromagnetic induction. Absorbers that operate through induction are generally substances with a relatively high electrical conductivity, or they develop a high conductivity when they are dissolved in the liquid carrier.

The major classes of absorbers include metals, present either in particulate form or as coatings on inorganic particulates; granular carbon; polar organic compounds, including polymers and non-polymers; aqueous solutions of ionic substances, especially salts that impart a high electrolytic conductivity to the solution; and certain minerals with high conductivity, including minerals that are semiconductors and minerals that are ionic conductors. The various classes of absorbers are disclosed in WO 2004/048463 A1.

Metal absorbers include all of the representatives of the class: irons and steels, copper, brasses, bronzes, aluminum, zinc, tin, lead, solder, silver, gold, and so forth. For preferred embodiments that utilize inkjet printing, nano-disperse metal particles may be suspended in a liquid carrier and filtered to a grain size below 1 $\mu$m to be compatible with the printing mechanism. While there are few limitations to doing this in principle, representatives that are currently commercially available are limited to silver and gold (available from Cabot Corp.) The principal limitation to incorporating other metal particles into inkjet suspensions is the rate of oxidative corrosion of finely dispersed metals: if reactive metals such as aluminum, magnesium and titanium are milled to grain sizes below about 10 $\mu$m, they become highly reactive, even pyrophoric, and so may be unsuitable for inkjet printing. These materials might be useable in one of the other embodiments, particularly the slurry technique or the electropohtographic technique described above.

Polar organic compounds that may be used as absorbers may include or consist or amines, phosphines, glycols, organic acids, polyglycols, and polyelectrolyes. These are substances that possess a high degree of electric polarizability and may react strongly to particular frequencies of electromagnetic radiation. Many of these substances are soluble in water or other solvents compatible with inkjet printing.

Examples of mineral absorbers that are semiconductors are zinc oxide and reduced iron oxide, FeO. Several minerals are ionic conductors, and their use has been reported as absorbers for microwave and induction heating. These include zeolites, bentonites, acid phosphate salts such as monopotassium phosphate. Other metal-organic materials such as titanium and zirconium hydroxyethyl phosphonate have been reported.

The absorber may be an aqueous solution of an ionic substance, such as phosphoric acid, hydrochloric acid, zinc chloride, stannous chloride, lithium perchlorate, or lithium acetate. Almost any soluble salt, acid or alkali might be chosen, although those listed above are preferred by virtue of their very high electrolytic conductivity in aqueous solution. Suitable absorbers are described in, for example, U.S. Patent Nos. 6,600,142 and 6,348,679. Some salts may be incorporated into the build material as dry particles. These may have very low electrical conductivity in their dry state, but become active as absorbers when moistened by the fluid component deposited by the printing mechanism. In some embodiments, the absorber may be soluble or even dispersible in non-aqueous solvents to be utilized in induction heating.

*Heat-Generating Materials for Chemical Sintering*

In an embodiment, a substance is incorporated into the build material that spontaneously releases thermal energy when combined with the fluid component printed in a pattern on the build surface. These include ionic substances that dissolve exothermally in aqueous printing fluids; combinations of substances that react with one another when activated by the printing fluid, and substances that react chemically with the printing fluid.

Examples of exothermic ionic substances include calcium chloride, anhydrous magnesium sulfate, trisodium phosphate, and sodium and potassium hydroxides. Reacting systems include alkaline oxides in combination with dry organic acids.

Examples of suitable alkalis include calcium, zinc, or magnesium oxides, sodium silicate, sodium or potassium hydroxides, trisoduim phosphate. These may be mixed in any combination with dry particulates of citric acid, tartaric acid, succinic acid, adipic acid, malic acid, malonic acid, maleic acid, glycolic acid, glutaric acid, or anhydrides thereof.

The alkalis in the previous example may be caused to react with acidic solutions or liquid acid anhydrides such as glacial acetic acid, aqueous phosphoric, sulfuric, nitric or hydrochloric acid, anhydrous lactic acid, and acidic solutions of salts such as monocalcium phosphate, mono-ammonium phosphate, aluminum acid phosphate, zinc or magnesium chlorides, or mixtures thereof.

*BUILD MATERIALS*

Build materials that are suitable for the processes described herein include thermoplastic particulate materials, inert fillers coated with thermoplastic materials, thermoset materials, inert fillers coated with thermoset materials, combinations thereof, and combined with more conventional solvent-activated adhesives and reactive fillers as described in European patent EP 1226019 B1, and U.S. Patent Publication Numbers US 2001/0197431 A1, US 2004/0056378 A1, and US 2005/0003189 A1.

As used herein, "thermoplastic particulate material" is meant to define a particulate material that becomes bonded when the adhesive particulate material is activated by a fluid, the component including a material that may be repeatedly softened by heating and hardened again on cooling.

As used herein "thermoset particulate material" is meant to define a class of materials that include a continuous thermoplastic phase, but also include a segment that chemically crosslinks during thermal processing. Thermoset materials have the property of becoming permanently hard and rigid when heated or cured. Upon heating, thermoset materials undergo chemical crosslinking, thereby increasing the molecular weight of the polymer chain.

*Thermoplastic particulate materials*

At least a part of the particulate material used may be amorphous, crystalline, or semicrystalline. A preferred particulate material has a linear or branched structure. Particularly preferred particulate material has, at least in part, a melting point of from about 50 to about 350 degrees C, preferably from about 70 to about 200 degrees C.

Particulate materials suitable in the present process are substances whose susceptibility to heating by, or absorption of, electromagnetic radiation of wavelength from 100 nm to 1 mm that of the selected absorbers. The particulate materials preferably also exhibit sufficient flowability in the heated state. Preferred materials have a melt flow index at 230°C of at least 2.0 g/10 min; preferably higher than 10 g/10 min, and most preferably about 20 g/10 min. .Particulate materials that may be used include polymers or copolymers, including, but not limited to, polyester, polyvinyl chloride, polyacetal, polypropylene, polyethylene, polystyrene, polycarbonate, polybutylene terephthalate, polyethylene terephthalate, polysulfone, polyarylene ether, polyurethane, polylactides, thermoplastic elastomers, polyoxyalkylenes, poly(N-methylmethacrylimide) (PMMI), polymethyl methacrylate (PMMA) ionomer, polyamides, copolyester, copolyamides, silicone polymers, terpolymers, acrylonitrile-butadiene-styrene copolymers (ABS), polyether sulfone, polyaryl sulfone, polyphenylene sulfide, polyaryl ether ketone, polyphthalamide, polyimide, polytetrafluoroethylene, or mixtures thereof.

The thermoplastic particulate material may include at least one of polyphenylsulfone, polyacrylonitrile, polycondensates of urea-formaldehyde, polyolefins, cyclic polyolefins, polyvinyl butyral, polyvinyl chlorides, acrylics, ethyl cellulose, hydroxyethyl cellulose, hydroxypropyl cellulose, methyl cellulose, cellulose acetate, hydroxypropylmethyl cellulose, hydroxybutylmethyl cellulose, hydroxyethylmethyl cellulose, ethylhydroxyethyl cellulose, cellulose xanthate, and combinations and copolymers. Preferred thermoplastic materials are amorphous thermoplastics with a high melt-flow index. The build material preferably includes amorphous cyclic polyolefin polymers such as ZEONOR® (Zeon Chemicals), TOPAS® (Ticaona), polyacrylates and polymethacrylates and their copolymers such as Plexiglas (Rohm & Haas), LUCRYL® (BASF), LUCITE® (Dupont), polymethyl methacrylamide such as KAMAX (Rohm & Haas); polystyrene such as STYRON© (Dow Chemicals), metallocene grade polyolefins such as ACHIEVE™ and EXCEED™ (ExxonMobil).

*Thermoset particulate materials*

Thermoset compositions are also suitable for use as build materials. A thermosetting composition, as used herein, refers to any single-component or multi-component reactive system that can crosslink by poly-condensation and/or radical and/or by a more specific polymerization route, passing from a state of a liquid or paste or solid with a soluble and/or fusible structure to the state of a solid with an infusible and insoluble structure. These materials have the property of becoming permanently hard and rigid when heated or cured. Upon heating, thermoset materials undergo chemical crosslinking, thereby increasing the molecular weight of the polymer chain. Examples of suitable thermoset compositions include epoxy with aromatic and aliphatic amines, amides, acid anhydrides, and multifunctional acids; isocyanate/amine, isocyanate/alcohol, unsaturated polyesters, vinyl esters, unsaturated polyester and vinyl ester blends, unsaturated polyester/urethane hybrid resins, polyurethane/urea, reactive dicyclopentadiene resin, reactive polyamides, or polyester sulfones. These materials are sold under brand names such as Transparent®, Everclear®, and Nap-Gard®, manufactured by DuPont; E-, H-, and U-series powder-coating materials manufactured by Prizm Powder Coatings; and Crelan® manufactured by Bayer. Another example of a suitable thermoset composition is a moisture-curable hot melt polyurethane, such as Jet-Weld® from 3M.

Other examples include particulate thermoset materials such as pulverized/encapsulated epoxy and pulverized dicyanamide that react together. Also, high molecular-weight polyols, polyamines, and polythiols may be combined with isocyanates, diacids, polyacids, and multifunctional acid anhydrides such that they may react very slowly at ambient temperature, but may react and solidify when heated.

In an embodiment, the build material includes thermoset compositions and/or thermoplastic vulcanizate (TPV). A TPV is a class of materials that include a continuous thermoplastic phase, but also include a segment that chemically crosslinks during thermal processing. This crosslinking reaction is irreversible once it has occurred. TPVs' mechanical and elastic recovery properties may be superior in comparison to these respective properties of thermoplastic elastomers. Examples of TPVs include ethylene propylene diene monomer (EPDM) and/or hydrogenated styrene block copolymer (HSBC) dispersed in a polypropylene matrix sold under the brand names of Santoprene® and Uniprene®. Other suitable high-performance TPVs are based on nylon/polyacrylate, nylon/silicone, and copolyester/elastomer formulations. By way of example, Zeotherm 100 Series produced by Zeon chemicals is based on polyacrylate (ACM) elastomers dispersed in a polyamide (nylon) plastic matrix; TPSiV™ is a Thermoplastic Silicone Vulcanizate produced by Multibase which is the division of Dow Corning; Nexprene® by Solvay is based on nitrile rubber dispersed in the polyolefin matrix; EPTV is a material developed by DuPont combining a copolyester matrix material with a highly cross-linked rubber modified ethylene-acrylate as the vulcanized segment.

In another embodiment, the absorber ink is applied via an inkjet printhead onto a layer of particulate build material in areas where the two-dimensional cross-section of the three-dimensional article is to be formed. Through a separate printhead, another fluid that is reactive to form a thermoset material is applied over the same regions where the absorber was printed. The printed area of each successive layer is exposed to induction where the absorber is heated to a temperature that initiates the cure of the second fluid to form a thermoset material and solidifying the region. The regions of the build material where the absorber was not applied remain cool and flowable, and may be reused again. Some examples of thermoset resins include: inkjetable epoxy with a viscosity low enough to be processed by a conventional drop-on-demand printhead, (generally below 20 mPa-s) printed onto a particulate build material containing an acid catalyst to initiate a cationic polymerization, or over pulverized dicyandiamide, adipic dihydrazide, or succinic dihydrazide, to melt and react with the epoxy when heated; inkjet-able one-component epoxy with latent amine curatives or latent acid catalysts that react only when heated; and inkjet-able acrylate (and/or methacrylate) monomers and oligomers with a peroxide catalyst included in the build material and that reacts only when heated.

## FILLERS

Other additives may be incorporated into the particulate build materials, such as inert fillers. These fillers help to reduce shrinkage of the three-dimensional object because they retain their shape to a substantial extent during the radiation treatment. In addition, the use of fillers permits, by way of example, alteration of the plastic and physical properties of the objects. In one preferred embodiment, the inventive build material contains from about 1% to about 70% by weight, preferably from about 5% to about 50% by weight, and more preferably from about 10% to about 40% by weight, of fillers, based on the total weight of the build material and having a mean particle diameter of about 5 micrometers to about 100 micrometers.

The inert filler material may include an inorganic material chosen such that it is either transparent or highly reflective to the radiation used to heat the absorber. Such filler material may include or consist essentially of soda-lime glass, borosilicate glass, aluminosilicate ceramic, limestone, plaster, bentonite, precipitated sodium silicate, amorphous precipitated silica, amorphous precipitated sodium silicate, amorphous precipitated lithium silicate, salt, aluminum hydroxide, magnesium hydroxide, calcium phosphate, sand, wollastonite, dolomite, amorphous precipitated silicates containing at least two types of ions selected from sodium ions, lithium ions, magnesium ions, and calcium ions, metallic oxides such as titanium dioxide, aluminum oxide, magnesium oxide, zinc oxide, silica (amorphous, fumed, or crystalline), calcium carbonate, magnesium carbonate, gypsum, talc, clay, boron nitride, olivine, calcium silicate, magnesium silicate, amino-silane surface-treated soda lime glass, epoxy-silane treated soda-lime glass, amino-silane treated borosilicate glass, epoxy- silane treated borosilicate glass, and amino-silane surface treated calcium silicate.

The inert filler material may include an organic material. The organic material may include or consist essentially of a carbohydrate, such as starch, modified starch, cellulose, maltodextrin, acacia gum, locust bean gum, pregelatinized starch, acid-modified starch, hydrolyzed starch, sodium carboxymethyl cellulose, sodium alginate, hydroxypropyl cellulose, methyl cellulose, chitosan, carrageenan, pectin, agar, gellan gum, gum Arabic, xanthan gum, propylene glycol alginate, guar gum, gelatin, rabbit-skin glue, soy protein, gluten, and combinations thereof.

The particulate build material may include an inert reinforcing fiber. The reinforcing fiber may include at least one of the following materials: natural polymers, modified natural polymers, synthetic polymers, ceramic, fiberglass, polyamide flock, cellulose, rayon, polyvinyl alcohol, and combinations thereof.

In one embodiment a dry particulate inert filler may be incorporated into the build material that possesses the ability to scatter or reflect the incident radiation without absorbing it. It has been found that materials with this characteristic enhance the absorption of radiation in the absorber-treated regions without greatly affecting the non- absorbing property of the untreated particulate build material. By this means, less radiation is needed to facilitate melting, sintering, or other forms of bonding in the absorber-treated regions. This reduces the overall energy consumption, speeds the process, and reduces the heat transmission to the untreated build material adjacent to the treated regions in the build area.

Examples of diffractive and reflective inert materials will be titania, zirconia and other metal oxide particles; high refractive index glass, sapphire; aluminum, steel and other metal dust; any particles that contain two or more materials with significantly different refractive indexes - hollow glass beads, core - shell glass beads

In an embodiment, an additive to the particulate build material may comprise a plasticizer specifically adapted to the thermoplastic or thermoset particulates. As used herein, the term "plasticizer" denotes a chemical substance that that lowers the melting point of the thermoplastic or thermoset particulate material; or causes the thermoplastic or thermoset material to possess a flow viscosity when melted that is lower than the pure melted thermoplastic or thermoset material by itself. Plasticizers may include, depending on the solubility parameter of the thermoplastic or thermoset components of the build material, mineral oils; phthalates, phosphates, adipates - dioctyl phthalate, dioctyl adipate, diisononyl phthalate, dibenzyl phthalate, dipropylene glycol dibenzoate, triaryl phosphate ester; epoxidized soybean oil, glycerol, propylene glycol, urea, ethoxylated glycerol, butanediol, pentanediol, hexanediol, erythritol, xylitol, and sorbitol.

*Coupling agent for inorganic filler*

In order to obtain better mechanical properties of the finished product, inorganic filler material may be treated with a coupling agent or a coupling agent may be added to the thermoplastic or thermoset component of the build material. Suitable coupling agents may include or consist essentially of, for example, silica-based, including silanes such as 3-isocyanopropyltrietyloxisilane, 3-glycidoxypropyltrimethoxysilane, aminoethylaminomethyl)phenethyltrimethoxysilane, 1,3-bis(iodomethy)tetramethyldisiloxane, diethylphosphatoethyltiethoxysilane, 3-methacryloxypropyltrimehoxysilane; metallo-organic titanates, metallo-organic zirconates, aluminates, and others. The metallo-organic coupling agent may be, for example, alcoxytrimethacryl titanate, isopropyl triisostearoyl titanate, neopentyl(diallyl)oxytrineodecanyl titanate, neopentyl(diallyl)oxytrineodecanyl zirconate, or alkylacetoacetate aluminum diisopropylate.

*Soluble Adhesives*

The process of bonding the build material by means of absorber does not preclude the use of other bonding mechanisms disclosed elsewhere, for example, in U.S. Patent No. 5,902,441 and U.S. Patent Publication Number 2005/0003189. In these publications, a dry particulate adhesive is chosen that is at least partially soluble in the printed fluid. These materials dissolve shortly after the fluid defining a layer is printed, greatly increasing the viscosity of the fluid and promoting adhesion between grains of fillers. The presence of these materials serves a useful purpose outside of the additional strength they provide: by increasing the viscosity of the printed fluid that prevent the migration of fluid outside of the boundaries of the article under construction. Further, they may tend to immobilize the absorber at specific sites between grains of thermally activated build material (thermoplastic or thermoset) thereby focusing the energy delivery to those locations.

Examples of at least partially water-soluble adhesives include, but are not limited to polyvinyl alcohol, sulfonated polyester polymer, sulfonated polystyrene, octylacrylamide/acrylate/ butylaminoethyl methacrylate copolymer, acrylates/octylacrylamide copolymer, polyacrylic acid, polyvinyl pyrrolidone, styrenated polyacrylic acid, polyethylene oxide, sodium polyacrylate, sodium polyacrylate copolymer with maleic acid, polyvinyl pyrrolidone copolymer with vinyl acetate, butylated polyvinylpyrrolidone, polyvinyl alcohol- co-vinyl acetate, and combinations and copolymers thereof.

*Active Fillers*

Articles formed by selective absorption sintering may have edges that curl up out of a plane in which they are printed because of differential cooling rates between build materials and absorbers, or because of capillary contraction of melted or sintered aggregates in the build material. This may cause a loss of accuracy in the part being formed, and may cause the printing process to fail because the curled layers may be caught by the leveling mechanism during the deposition of a layer of build material.

Polymeric build material may be mixed with one or more resins and/or cements, generally termed "active" fillers. In a preferred embodiment, the resins or cements are water soluble. The resin or cement content may be from 1% to 99% by weight of the build material. The purpose of the active filler is to provide the printed layer with short term strength sufficient to resist the forces created by differential cooling after sintering the layer. Some or most of the final part strength may be derived from the material properties of the polymer and not from the resin or cement comprising the active filler.

As used herein, the term "active filler" comprises a component of the particulate build material that participates in a chemical reaction that is initiated by the presence of the carrier fluid or binder deposited within a layer. In US. Patent Publication No. 2004/0056378 AI, a method for forming three-dimensional objects is disclosed that incorporates a two-stage hardening mechanism to eliminate distortion during curing. Embodiments described herein are compatible with the methods disclosed in the application referenced above. For example, in accordance with the process described in U.S. Patent Publication No. 2004/056378, a separate chemical reaction between filler components or a filler component and the printed fluid may create a solidified network in a short period of time before the heating step is performed. These components are called "active" fillers. The solidification or bonding disclosed herein may constitute the second-stage hardening mechanism of a two-stage process as disclosed in the above-referenced application. The active filler is chosen such that it forms a solid network or gel within the printed regions of the build material that resists further stresses imposed by, for example, capillary attraction, evaporation shrinkage, or distortions resulting from melting, sintering, or crosslinking of the thermoplastic or thermoset components used in aspects described herein.

The active filler may include or consist of an inorganic adhesive, such as at least one of plaster (accelerated by any of a number of accelerators including terra alba, sodium chloride, potassium chloride, ammonium chloride, under-calcined plaster, alum, potassium sulfate, potassium aluminum sulfate, ammonium sulfate, sodium sulfate, calcium hydroxide, calcined lime, sodium tetraborate, potassium nitrate, ammonium oxalate, ammonium nitrate, magnesium sulfate, barium sulfate, or aluminum sulfate), bentonite, sodium silicate, salt, Portland cement, magnesium phosphate cement, magnesium chloride cement, magnesium sulfate cement, zinc phosphate cement, calcium phosphate cement, zinc oxide - eugenol cement, and combinations thereof.

A preferred embodiment includes no more active filler than necessary to counteract the forces created during cooling of the sintered layer, such that the properties of the resin or cement comprising the active filler do not dominate the properties of the finished part. The preferred level is below 50% by volume, and most preferably 30% by volume or less. Volume percents here are determined by bulk density. Since inorganic fillers generally possess a much higher density than organic materials, the volume percentage is most meaningful here.

In a preferred embodiment, the liquid carrier for the absorber that is printed acts as a solvent or catalyst for the active filler in the solid build material so that the absorber for the sintering energy can be delivered at the same time as the solvent for the resin or cement comprising the active filler. This is typically an efficient method for creating a part.

In another preferred embodiment, the geometry printed with solvent or catalyst for the active filler is the same as the geometry that is sintered.

### Thermoplastic and thermoset coatings onfillers

When 100% thermoplastic particulate materials are subjected to temperatures above the glass transition and melting point temperatures, the thermoplastic particle may distort from volume expansion and then shrinkage as it liquefies, or it may migrate through the pores of the particulate build material by capillary attraction. These motions, if they happen in a uncontrolled way, can lead to distortion of layers of sintered material. This type of distortion may decrease the accuracy of articles created from three-dimensional printing material systems utilizing thermoplastic and thermoset particulate additives. Articles may be heated to high temperatures at or above a melting point of the thermoplastic to acquire the toughness and strength of the thermoplastic or thermoset additive as it melts and fuses together.

Coating inert particles with a liquid coating that is thermoplastic or thermoset when dried may be a way to decrease the amount of distortion the coating may undergo when subjected to high temperatures above the glass transition temperature and melting point of the coating. The inner inert phase of the particle may exhibit significantly less distortion when subjected to the heat required to melt the coating phase and provide extra stability to the thermoplastic or thermoset phase with respect to fluid flow from melting. The distortion on melting is confined to the thin thermoplastic coating on the surface of the particles. The apparent viscosity is a bulk property that is the combination of rigidity of the underlying particle and the flow of the coating, and this property generally increases for systems containing large fractions of inert fillers.

The filler substrate for the thermoplastic or thermoset coating may be regarded as a specific form of the abovementioned fillers or pigments. The build material may comprise grains of a first material that are coated with a layer of a second material, wherein the thickness of the layer is such that the resulting particulate material, containing this combination of the first material and second material coating, has a grain size as discussed above. The second material, which makes up the coating of the grains of the first material, is preferably less susceptible than the selected absorbers to direct heating by electromagnetic radiation or electromagnetic induction as described above. The second material preferably also exhibits sufficient flowability in the heated state, and is preferably capable of melting or sintering on exposure to heat, the heat being that provided by the absorber.

Typically, when describing coated particles, their components fall into one of two categories: core and coating, with simply coated particles having one of each. In some embodiments, multiple coatings may be applied in successive shells. Agglomerates, i.e., grains with multiple core particles, are occasionally also grouped into this category. Coated materials need not possess a uniform grain size or coating thickness. A coating process may possibly yield a build material that is structured as agglomerates of the first and second materials intermixed; the coating process functioning optionally as a particle-enlargement process as well as a coating process.

Coating materials that may be used include, but are not limited to, the abovementioned polymers or copolymers, preferably selected from polyester, polyvinyl chloride, polyacetal, polypropylene, polyethylene, polystyrene, polycarbonate, polybutylene terephthalate, polyethylene terephthalate, polysulfone, polyarylene ether, polyurethane, polylactides, thermoplastic elastomers, polyoxyalkylenes, poly(N-methylmethacrylimide) (PMMI), polymethyl methacrylate (PMMA), ionomer, polyamides, copolyester, copolyamides, silicone polymers, terpolymers, acrylonitrile-butadiene-styrene copolymers (ABS), polyether sulfone, polyaryl sulfone, polypheylene sulfide, polyaryl ether ketone, polyphthalamide, polyimide, polytetrafluoroethylne, mixtures thereof, or phenolic resins.

The particulate build material may include inorganic particles coated with a liquid coating that is thermoplastic or thermoset when dried. The coating may be deposited from either a solvent-based solution or an aqueous dispersion/emulsion. In an embodiment, the dried coatings preferably have a sufficiently low softening/melting point to be effectively heated sintered or fused at a reasonable temperature. The temperature ranges are nearly the same as for thermoplastic material,, from about 50°C to 350°C; preferably from about 70°C to 200°C. Such polymers, e.g., polyurethanes, are available as aqueous dispersions and are good candidates because of the range of softening/melting points that can be acquired.

Inorganic core filler materials have relatively high surface energy and provide good adhesion of the thermoplastic outer coating onto the surface of the inorganic particle. Rough, irregular, and porous fillers may provide better adhesion to the thermoplastic than round, spherical, nonporous particles. Surface treated particles, using coupling agents as described above, e.g., amino-silane coated soda-lime glass, may also increase adhesion of the outer coating to the core.

Typical inorganic fillers suitable for forming the core of the coated particle include metallic oxides such as titanium dioxide, magnesium oxide, zinc oxide, aluminum oxide, silica (amorphous, fumed, or crystalline), soda-lime glass, borosilicate glass, calcium carbonate, magnesium carbonate, gypsum, talc, clay, boron nitride, olivine, calcium silicate, magnesium silicate, ceraminc, aluminosilicates, amino-silane surface-treated soda lime glass, epoxy-silane treated soda-lime glass, amino-silane treated borosilicate glass, epoxy-silane treated borosilicate glass, and amino-silane surface treated calcium silicate, limestone, plaster, bentonite, precipitated sodium silicate, amorphous precipitated sodium silicate, amorphous precipitated lithium silicate, salt, aluminum hydroxide, magnesium hydroxide, calcium phosphate, sand, wollastonite, dolomite, amorphous precipitated silicates containing at least two types of ions selected from sodium ions, lithium ions, magnesium ions, and calcium ions. Any of the fillers listed above as "inert" fillers may be used as substrates for coatings of thermoplastic or thermoset materials. Appropriate combinations of materials may be evident to those experienced in the art.

A typical coating that may be applied as a liquid and dried to form a thermoplastic includes or consists essentially of, for example, any of the following: aqueous aliphatic urethane dispersions, aqueous acrylic emulsions, aqueous dispersion of ethylene acrylic acid copolymers, solution aliphatic urethanes, solution polymethylmethacrylates, solution polyethylmethacrylate, solution polybutylmethacrylate, ethylene vinyl acetate emulsions, alcohol soluble polyamides, sulfonated polyester, and cyanoacrylates.

### Particle coating techniques

Coating of particulate materials provides a means of combining multiple chemistries in each individual grain, and may be accomplished by a variety of methods. A few examples of these methods are fluid bed coating, hybridization, and spinning disk coating. Fluid-bed coating is most commonly preferred when a uniform coating is desired on substrate particles that are uniform in size. Hybridization is a process by which small grains of coating materials are agglomerated on the exterior of larger substrate grains. The disk coating process can yield uniform coatings on substrate grains, or under different conditions, it can yield agglomerates of uniformly mixed grains of substrate and coating material. The choice of coating method depends on the desired application and the properties and size distribution of the raw materials.

A method for coating particles is fluid bed processing, in which a charge of dry substrate particles is fluidized in a hot moving air stream, and a solution of coating material is sprayed into the charge, typically by means of a pressure or two fluid nozzle. The atomized droplets of coating material adhere to the surfaces of the substrate particles, and the solvent carrier is evaporated in the hot air stream leaving a dry film of coating. In an efficient process, the air stream is heated to a level above the boiling point of the solvent, but low enough so as to not dry the droplets of coating material before they adhere to the core particles, as well as not degrade either of the component materials. This method may be adapted to make use of molten coating materials, rather than those dissolved in solvent by chilling the fluidizing air stream, provided the viscosity of the melt is low enough to spray. This process is compatible with both thermoplastic and thermoset materials, provided these materials can be dissolved in a solvent that is compatible with the processing method, or if the melt viscosity is low enough to facilitate the molten coating process at temperatures that are compatible with the processing equipment.

In the hybridization coating process, small grains of coating material (typically around 1-5 $\mu$m in size) are mixed with larger substrate grains (typically 50-300 $\mu$m in size) and the mixture is subjected to an energetic shearing action. Particles of the finer coating material adhere to the surface of the substrate grains by electrostatic attraction, or by a quiescent chemical bonding if such exists between the coating and the substrate. This type of coating method is particularly useful for dry-blending of particulate materials that are capable of chemically reacting once they are moistened by the printed fluid, but react only very slowly in the dry state.

In spinning-disk coating, the substrate and filler grains are dispersed together in a liquid carrier. Typically, the liquid carrier is a solvent for the coating material, and a non- solvent for the substrate. The resulting slurry is sprayed onto the surface of a rapidly rotating disk that atomizes the slurry and sprays it into a chamber with rapidly agitated hot air. The solvent is evaporated from the droplets of slurry, resulting in solid particles of substrate covered with the coating material that falls out of solution when the liquid carrier evaporates. Depending on the processing conditions, the droplets of atomized slurry may contain one or several particles of substrate. This process is compatible with both thermoplastic and thermoset materials, provided these materials can be dissolved in a solvent that is compatible with the processing method.

Thermoset coatings can be co-extruded with inert filler particles at a temperature below the crosslink temperature of the thermoset material. Thermoplastic coatings may be formed in the same way, with the processing temperature above the melt flow temperature of the thermoplastic. The extruded material can undergo coarse and fine milling operations followed by particle size classification in order to achieve the desired grain size distribution. The structure of the grains may be a disordered mixture of two phases rather than discrete particles with uniform coatings.

***Absorbing filler applications***

In yet another embodiment, the absorber may be the particulate build material itself, e.g., calcium sulfate. As mentioned in U.S. Patents Nos. 5,328,539 and 5,182,134, $CaSO_4$ may be used as an absorber for electromagnetic induction. An aqueous ink may be applied onto a layer of a plaster-based build material in areas where the two-dimensional cross- section of the three-dimensional article is to be formed. Each successive layer may be exposed to induction that heats up the calcium sulfate to drive off the water from the printed regions. This procedure dries each layer so that the article may be removed relatively quickly.

In another embodiment, an article is created from a material system where either the absorber is applied as an ink via an inkjet printhead, or is included and evenly distributed in the build material, like calcium sulfate in Z Corp products zp®100 and zp®130. The article may then be infiltrated with a heat-activated infiltrant resin such as epoxy/amine resins like ZMax™ or ZSnap™ from Z Corporation. The article may then be placed in an induction oven, and exposed to low frequency induction to evenly heat and cure the infiltrated article

***Flow Properties of Build Materials***

Compositions have been disclosed that relate to control of the flow properties of the build material in Three Dimensional Printers. The three principal methods are the addition of liquid "processing aids," control of grain size distribution, and the addition of solid fillers that contribute to the frictional behavior of the build material. Many candidate materials have been disclosed previously, for example, in U.S. Patent Publication Number 2005/0003189. Previously, however, the exact implementation of these methods has been by trial and error. Here, some mechanical properties of dry particulate build materials are disclosed that are particularly suited for use in Three Dimensional Printing, especially in contrast to other formulations of similar materials for other uses that may not require special flow characteristics of the raw materials.

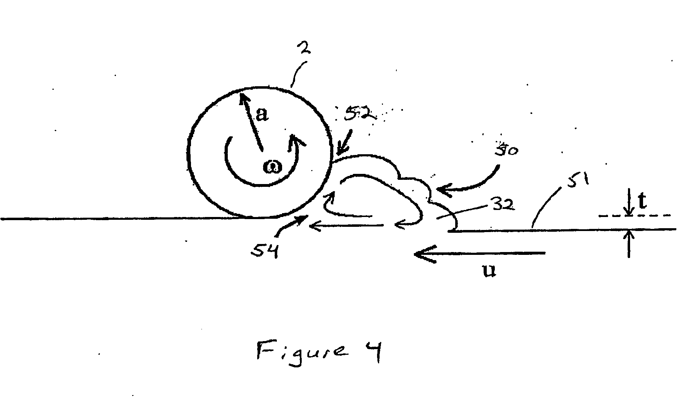

Referring to Figure 4, in an embodiment of a three dimensional printer, dry, free-flowing particulate build material is spread by a rotating spreader rod, i.e., spreading roller 2. The rod rotates in a direction $\omega$ counter to a direction of motion of the spreading mechanism. A circulating bead 50 of build material 32 is pushed in front of a moving rod over a stationary bed. For the sake of convenience, the system is shown in the frame of the rod with a moving bed 51 and stationary bead. The bed is assumed to approach the spreader in a direction u, and the bead of build material circulates around a nearly stationary center. One may assume that the build material is lifted by the leading surface of the spreader rod because it adheres to a rod surface 52. The direction of the flow of the build material reverses close to a nip 54, i.e., an interface between the spreading roller 2 and the moving bed 51.

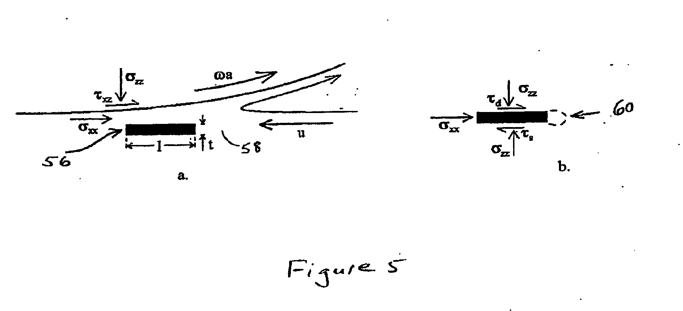

The equilibrium of a small printed feature as it passes directly underneath the spreader rod is analyzed. On typical 3D Printers, a thickness t of a single printed layer of build material 32 is approximately 1/100 the radius a of the spreader rod. Referring to Figure 5, the spreader exerts a compressive stress $\sigma_{zz}$ and a shear stress $\tau_{xz}$ on the build material directly underneath it. There is also a horizontal stress component $\sigma_{xx}$.

One may assume that the horizontal stress applied to a left edge of a feature 56 of an article is not opposed by another stress on a right edge. The feature is assumed to leave a wake 58 behind it where build material, after being swept along the upper surface, is unable to wrap around the downstream corner and establish a stress analogous to hydrostatic pressure against the right surface. The horizontal stress applied to the left may be opposed by a shear stress along s bottom surface. A free body diagram of the feature is shown in Figure 5b, including a hollow cavity 60 formed in the feature wake 58.

It is assumed here that dry, free-flowing particulate build material in motion possesses a different shear strength than build material that has been allowed to rest for a time. In general, one may expect a different yield locus for build material in different states of motion. For purposes of this derivation, this is expressed here as two different sets of yield parameters, "static" and "dynamic" values of the cohesion and friction angle.

These properties of granular materials are amply supported in the literature. See, for example, B.M. Das, Advanced Soil Mechanics, Hemisphere Pr. 1997, pp. 315-317 or S. Aranson & L. S. Tsimring in The Physics of Granular Media, H. Hinrichsen & D. Wolf, eds, Wiley-VCH, (2004) pp. 146-147.

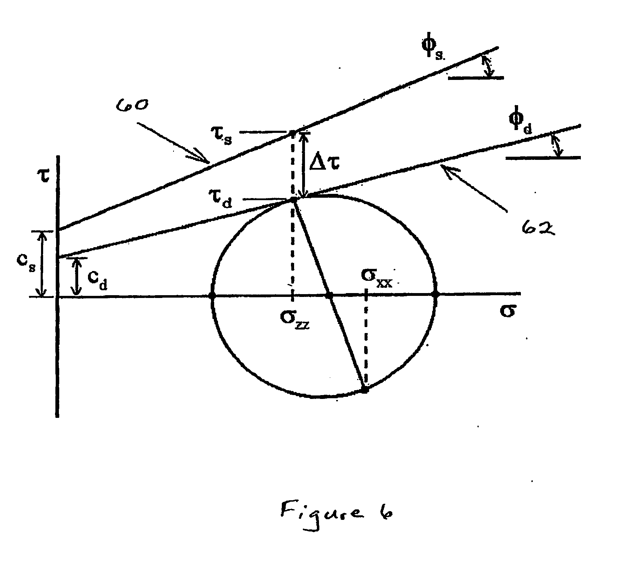

A force balance on the feature shown in Figure 6 leads to the equation:

$$ l \left[ c_s - c_d + \sigma_{zz} (\tan\phi_s - \tan\phi_d) \right] = L \, \Delta\tau > t\sigma_{xx} \quad (1) $$

for the feature to remain in place. The normal stress against the bottom surface of the feature is assumed the same as that against the top surface. The difference in shear strength between the static values (static yield locus 60) and dynamic values (dynamic yield locus 62) with normal stress $\sigma_{zz}$ is denoted by $\Delta\tau$.

"Bredt flow parameter" (Br) is herein defined, expressing, in general, the propensity for printed features to shift in the build area of a three dimensional printer during spreading of build material:

$$ \Delta\tau / \sigma_{xx} = Br > t / L \approx 0.1 \quad (2) $$

The ratio t/L is slightly arbitrary. One may assume for practical purposes that features with a length at least several times the layer thickness (L ~ 10 times t) are those that are preferably considered in this model. Layers with thickness of 100 micrometers are standard in three dimensional printing machines that are currently available, and instability of isolated patches smaller than 1.0 mm may have a minimally discernable effect on the appearance of a model.

For the flow conditions most useful for three dimensional printing, the build material is noncohesive, i.e., the cohesion of the granular material is much less than the dynamic pressure of material in flow. Using reasonable values for the bulk density of the build material and spreading speed in a standard ZPrinter®310 three dimensional printer, one obtains an order of magnitude estimate:

$$ c_s \approx c_d \ll \rho(u + \omega a)^2 \approx 600 \, Pa \quad (3) $$

A material having shear strength of this magnitude is a weak gel such as yogurt. While it is not "strong" in any sense of the word, it is by no means "free-flowing." As an additional estimate of the lower bound of the cohesion, we may observe that the bead of free- flowing particulate build material may be in a state of yielding at the bottom of the pile when the counter-roller begins to move it across the build area. In a ZPrinter®310 three dimensional printer, the bead is approximately 1 cm tall. Accordingly, the following inequality holds:

$$ c_s \approx c_d \ll \rho g h \approx 100 \, Pa \quad (4) $$

This is typically a minimum acceptable range for cohesion in a particulate build material for it to be considered "free-flowing." While the compressive and shear stress imposed on the build material through the motion of the counter-roller may have a magnitude approximately 600 Pa, the cohesion is preferably accordingly less than 100 Pa in order for it not to adversely affect the layering of build material.

With the assumption that the cohesion is negligibly small, the following simplification can be made.

$$ (\tan\phi_s - \tan\phi_d) > t \, \sigma_{xx} / L \, \sigma_{zz} \quad (5) $$

and

$$\frac{\sigma_{xx}}{\sigma_{zz}} = \frac{(1+\sin\phi_d)}{(1-\sin\phi_d)} \quad (6)$$

This leads to an equation

$$(\tan\phi_s - \tan\phi_d)\frac{(1-\sin\phi_d)}{(1+\sin\phi_d)} = Br_{nc} > 0.1 \quad (7)$$

Equation 6 expresses a vitally important feature of free-flowing particulate build materials that are suitable for use in three dimensional printing machines. The quantity on the left is termed the "Bredt flow parameter for noncohesive particulate materials," and it preferably has a value greater than about 1/10 for small printed features to remain stationary during spreading.

### Measurement of static and dynamic friction coefficients

Methods exist for measuring the static yield properties of granular materials in shear. See, for example, B.M. Das, Advanced Soil Mechanics, Hemisphere Pr. 1997, pp 313- 326. It is found, however, that the values for the yield parameters $\phi$ and c vary with experimental conditions, and it is necessary to measure the properties in stress range of interest.

An example of a piece of laboratory equipment that is capable of measuring the static friction characteristics of particulate materials is the "ShearScan TS12" manufactured by Sci-Tec Inc. This device holds a sample of material in a cylindrical cell and applies a vertical load to the material to consolidate it to a specified level. The device then applies a gradually increasing transverse shearing force until it detects slip in the sample of material. It performs this measurement across a range of applied loads to develop a yield locus analogous to those pictured in Figure 3. Since the instrument measures the shear stress at the instant of rupture, this is the "static" friction in the particulate material.

One difficulty in this analysis with the ShearScan instrument is that it is designed to measure the frictional characteristics of particulate materials in large silos when they are subjected to stress levels much larger than that found in the spreading system of a 3D Printer. The stress was estimated in equation (3) above to be on the order of 1/2 kPa, about 1/10 the stress levels in the operating range of the ShearScan.

Furthermore, there does not exist an analogous instrument to measure the "dynamic" friction characteristics of particulate materials. Several instruments called "powder rheometers" exist, for example the FT4 Powder Rheometer manufactured by Freeman Technology. This device doesn't strictly measure a yield locus, however. It measures the rate of working of a particulate material in a specialized mixing cell where the stresses in the sample are not known. It is therefore not suitable for use in this model.

An approximate laboratory procedure may provide estimates of the flow parameter for noncohesive particulate build materials. This is done by measuring the angle of repose of a pile of a particulate material under static and dynamic conditions. The procedure is accomplished as follows. On a metal sheet, a conical pile is formed from a particulate material sample by sprinkling particles very slowly over one point from a height of about 1 cm above the growing top of the pile. The diameter d and height h of the pile are measured. The ratio d/2h is an approximate measure of the static friction coefficient $\tan\phi_s$. Next, a small piece of metal, such as a screwdriver, is used to tap lightly on the plate so the pile collapses. The height and diameter are measured again, and the ratio d/2h is an approximate measure of the dynamic friction coefficient $\tan\phi_d$.

The height of the pile is chosen such that

$$gh \approx (u+\omega a)^2$$

This ensures that the stress at the bottom of the heap is in approximately the right range. For ordinary 3D Printers manufactured by ZCorp, this height is roughly 5 cm. It is necessary to tap the plate relatively lightly so that the motion of the pile after the tapping is primarily driven by gravity, and not by kinetic energy from the tapping motion. One or two light taps may be sufficient.

Several particulate samples were measured in this manner, and the data are presented below. The calculated flow parameter is the "noncohesive" form given in equation 6.

Table 1. Measurements of flow parameter for various candidate particulate build materials

| particulate sample | tan phi s | tan phi d | Br(nc) |
|---|---|---|---|
| zp100 | 0.829268 | 0.52381 | 0.111833 |
| zp100 | 0.909091 | 0.45 | 0.191933 |
| zp100 | 1 | 0.654545 | 0.100967 |
| zp130 | 0.65 | 0.348837 | 0.151927 |
| zp130 | 0.742424 | 0.397059 | 0.159174 |
| zp130 | 0.789474 | 0.454545 | 0.138869 |
| 4F lucite | 0.53125 | 0.28169 | 0.143096 |
| 50 $\mu$m $Al_2O_3$ | 0.639344 | 0.439394 | 0.08523 |
| Coated glass beads | 0.45 | 0.349206 | 0.050812 |
| +10 ppm Neobee M20 | 0.461538 | 0.323529 | 0.073043 |
| +20 ppm Neobee M20 | 0.516129 | 0.328571 | 0.09832 |
| +30 ppm Neobee M20 | 0.671642 | 0.527778 | 0.052302 |
| +40 ppm Neobee M20 | 0.786885 | 0.693548 | 0.025571 |
| +50 ppm Neobee M20 | 0.781818 | 0.763636 | 0.004448 |

- zp100 and zp130 are products marketed by ZCorp for building appearance models.
- 4F Lucite from Ineos Acrylics has a particle size between 55 $\mu$m and 70 $\mu$m.
- Tabular 50 $\mu$m $Al_2O_3$ acquired from KC Industries
- Glass Beads from Potter's Industries, 72 $\mu$m grain size, aminosilane surface treatment
- Neobee M20 was used to coat glass beads. Neobee M20 from Stepan Industries

As these data approximately show, build materials designed by Z Corp for three dimensional printing all fall in the same range, a little bit higher than the required lower bound. Some scatter in the results is to be expected with this approximate technique. Although the static angle of repose of zp100 is higher than in zp130, the flow parameter for the two build materials is nearly the same. In fact, qualitative experience shows that these two products perform about the same.

Of the other three materials tested, glass spheres had the poorest performance, with a flow parameter of only 0.05. This, too, is supported by qualitative experience, glass beads alone are unsuitable for 3D Printing from the standpoint of spreading.

To illustrate the extreme sensitivity of particulate behavior with even small additions of certain chemicals, generally referred to as "processing aids," a series of data were taken in which tiny (10 ppm) increments of a low-viscosity emulsifier are added to a sample of glass spheres. The flow parameter rises quickly, peaks, and falls away even more quickly even though both the static and dynamic friction angles increase through the series. The critical point occurs when the dynamic angle of repose transitions from a nearly constant value to a linearly increasing value. This shows that there can be rather sharp optima in composition to obtain useful spreading characteristics.

This test is a fairly useful technique for identifying relative performance properties between different candidate materials. The preferred method for evaluating flow properties of candidate build materials during formal optimization after the initial selection period is to test samples of the material on a working three dimensional printer. Certain pathological geometries are known to those experienced in the art, and they can be evaluated either qualitatively or quantitatively. One particularly useful part for observing stability during spreading is a flat plate studded with pegs that are oriented downward during the build. During printing, the earliest layers addressed are a series of disconnected patches that are relatively free to shift in the build material. After these have been formed, a plate is printed that joins all of the pegs together in a single object. One can easily examine whether the pegs are uniform and straight, and one can evaluate the quality of spreading on that basis.

## Liquid Flow Aids

The build material may include a processing aid, such as a viscous liquid and/or a polymer having a low melting point. The processing aid material may include or consist essentially of at least one of the following materials: polyethylene glycol, polypropylene glycol, sorbitan monolaurate, sorbitan monooleate, sorbitan trioleate, sorbitan sesquioleate, polysorbates, poly (ethylene oxide) modified silicone, poly (propylene oxide) modified silicone, secondary ethoxylated alcohols, ethoxylated nonylphenols, ethoxylated octylphenols, $C_8$ - $C_{10}$ alcohols, $C_8$ - $C_{10}$ acids, polyethylene oxide modified acetylenic diols, citronellol, ethoxylated silicones, ethylene glycol octanoate, ethylene glycol decanoate, ethoxylated derivatives of 2,4,7,9-tetramethyl-5-decyne-4,7-diol, polyoxyethylene sorbitan mono-oleate, polyethylene glycol, soybean oil, mineral oil, fluroalkyl polyoxyethylene polymers, glycerol triacetate, oleyl alcohol, methyl oleate, isopropyl palmitate, other hydrophobic fatty-acid esters, oleic acid, squalene, squalane, essential oils, esters, terpenes, greases, or waxes, propylene glycol, ethylene glycol, $C_8$ - $C_{10}$ esters of mono-, di-, or triglycerides, fatty acids, ethoxylated fatty acids, lecithin, modified lecithins, unsaturated mono- and diglycerides, distilled acetylated monoglycerides, diacetyl tartaric acid esters of mono- and diglycerides, polyglycerol esters, polyglycerol polyricinoleate, and combinations thereof.

It is worth noting that many of these flow aids may also function as plasticizers for the thermoplastic or thermoset components of the build material.

These liquid additives may be mixed with the dry build material at relatively low weight fractions, most preferably less than 0.5 percent by weight relative to the solid fraction. Generally, a very small addition of liquid is all that is permitted in order to prevent the build material from becoming cohesive, and therefore, not free-flowing. This cohesive yield strength was estimated in equation (4) above to be around 100 Pa.

Some processing aids are extremely effective on the friction low levels below the concentration where it affects the cohesion to any significant degree. This is demonstrated by the use of Neobee M20 on glass beads as shown in Table 1. While the precise nature of the phenomenon leading to changes of the Bredt flow parameter with varying content of processing aid is not known, it is hypothesized that the cohesive force between stationary particles is more greatly affected by the presence of a liquid processing aid than the viscous forces between particles in motion.

Besides their effect on the frictional flow properties of the granular build material, processing aids are chosen on the basis of chemical compatibility with the chemical nature of the build material, their ability to reduce dust emissions from the operating machine, and their ability to influence to flow of the printed fluid (liquid binder or absorber in liquid carrier) through the pores in the granular build material. In particular, it is desirable that the printed liquid remain closely associated with the location where it was printed, and it is desirable that the processing aid be slightly repellant to the printed liquid to help arrest its migration through the pores in the loose build material adjacent to the printed regions.

In the preceding sections, the term "dry free-flowing particulate build material" has been used extensively to describe the inventive substance used for constructing articles. The presence of small quantities of nonaqueous liquids does not affect this definition. The upper limit to the quantity of a flow aid is determined by the degree of cohesion it imparts to the build material. Additions that are excessive prevent the build material from flowing freely, but when the correct amount is used, the build material flows freely, and it may be considered "dry" in a mechanical sense for purposes of embodiments of this invention. It is the operating range of the "Bredt" flow parameter that determines the limits to what may be considered "dry" build material.

### Grain Size Distributions

In one embodiment the granular components of the build material have a median grain size ($d_{50}$) of from about 5 to about 150 micrometers, preferably from about 20 to about 100 micrometers and more preferably from about 40 to about 70 micrometers. Depending on the application, however, build materials comprising smaller particles, and also those comprising larger particles, may be used. Three-dimensional articles with preferred resolution and surface smoothness may be obtained using particles whose median particle size is from about 10 to about 45 micrometers, preferably from about 10 to about 35 micrometers, and more preferably from about 20 to about 30 micrometers.

Difficulties may be encountered in the processing of fine materials having a $d_{50}$ smaller than 20 micrometers, and in particular smaller than 10 micrometers, because these particles do not flow well, and bulk densities significantly decrease. These features can increase the porosity in the final object. For optimal spreading characteristics, it may be advantageous to use particles whose median size $d_{50}$ is from about 60 to about 150 micrometers, preferably from about 70 to about 120 micrometers, and more preferably from about 75 to about 100 micrometers.

The aforementioned properties of build materials for three dimensional printing are not entirely compatible with one another, and so for materials that are commercially useful in three dimensional printing machines, the grain size distribution most often represents a compromise between better accuracy and more reliable layering of the build material. Most typically, it is a relatively broad grain size distribution that covers the full range between 10 micrometers and 150 micrometers with a median grain size preferably between 30 micrometers and 75 micrometers that has optimal performance. As stated above, the presence of a processing aid can have a dramatic effect on the flow properties of the build material, and the optimal grain size distribution is highly dependent on the choice of processing aid.

During formulation of a particulate build material, the density of compacted layers is preferably taken into account because of the way in which it affects strength and distortion of the final part. Addition of fine grains in a controlled amount may have a beneficial effect on the flow parameter, and so a balance is preferably struck such that the flow parameter is maintained with an acceptable range while maintaining a high density in the material produced.

In one embodiment the dry particulate build material preferably comprises a particulate material prepared by milling, precipitation, and/or anionic polymerization, or by a combination of these processes. In a preferred embodiment, the build material comprises a precipitation of somewhat excessively coarse particles that have been subsequently milled, or a precipitation of particles that have been subsequently classified to adjust the particle size distribution.

### *Fine Fillers as Flow Aids*

One or more particulate additives may be used to improve handling and spreading of the build material. By way of example, these additives may act as flow aids. The may comprise from about 0.05% to about 5% by weight, and preferably from about 0.1% to about 1% by weight, of additives, based the total weight of the of the components of the . Flow aids include, but are not limited to, fumed silicas, stearates, or other flow aids known from the literature, for example, tricalcium phosphate, calcium silicates, $Al_2O_3$, MgO, $MgCO_3$ or ZnO. By way of example, fumed silica is supplied by Degussa AG with the trademark Aerosil®.

Any of the ingredients listed above as potential inert fillers or substrates for thermoplastic coatings may be used in low percentages as flow aids if they possess frictional characteristics that affect the flow parameter in a beneficial way. Many of the most effective particulate flow aids are fibers of natural polymers, modified natural polymers, synthetic polymers, or ceramics. Several particularly beneficial inert fillers are inorganic materials that may include or consist essentially of plaster, terra alba, bentonite, calcium silicate, calcium phosphate, magnesium silicate, magnesium phosphate, aluminum oxide, aluminum hydroxide, limestone, dolomite, wollasonite, mica, glass fiber, glass powder, cellulose fiber, silicon carbide fiber, graphite fiber, aluminosilicate fiber, and mineral fiber. Some preferred inert fillers are organic fillers that may be useful as flow aids include starch, modified starch, maltodextrin, cellulose, polypropylene fiber, polyamide flock, rayon, polyvinyl alcohol fiber, sugars and sugar alcohols, especially sucrose, lactose, mannitol, sorbitol, xylitol, and maltitol; and carbohydrates such as acacia gum, locust bean gum, pregelatinized starch, acid-modified starch, hydrolyzed starch, sodium carboxymethyl cellulose, sodium alginate, hydroxypropyl cellulose, methyl cellulose, chitosan, carrageenan, pectin, agar, gellan gum, gum Arabic, xanthan gum, propylene glycol alginate, guar gum, and combinations thereof.

### *Antistatic additive*

The polymeric particulates described herein typically have low dielectric constants and, therefore, may easily build up static charge. This can cause uneven spreading of the build material and agglomeration of the particles. Use of antistatic additives may be highly beneficial. Examples of antistatic agents are glycerol stearate, alkyl sulfonate, and ethohylated amine sold under the name ATMER 261 by Ciba.

Further understanding may be obtained by reference to certain specific examples, which are provided herein for purposes of illustration only, and are not intended to be limiting unless otherwise specified.

EXAMPLES

Example 1

Production of a tensile specimen using polyolefin based composition.

Using the apparatus described above, a tensile specimen was made using a dry free-flowing particulate composition containing 17.0% of polypropylene (Microthene FP-8090 average particle size 20 $\mu$m) and 83.0 % of aminosilane-modified glass beads (Potters Industries 3000E) as a build material. The absorber was zb®56 binder from Z Corporation containing 2.0% solids by weight of chemically modified carbon black (Cab-O-Jet IJX352B). A total of 16 layers were printed, and each layer in turn was irradiated by a 500-watt tungsten- halogen lamp (5" length) that traveled over the build area at a speed of 17.7 mm/sec. Layer thickness was 0.10 mm and volume fraction of the absorber fluid was 0.19.

Final part had tensile strength of 5.76 MPa and elongation at break of 4.5%

Example 2

Production of a tensile specimen, a flexural strength specimen and a 50-layer thick part using thermoset epoxy containing inert filler.

In this example, the build material consisted of 29.6 % granulated epoxy: Everclear® EFC500S9 from Dupont, and 70.4% by weight of 75 $\mu$m diameter glass beads (Potter Industries 3000E grade). Absorber fluid, volume fraction of the absorber fluid and build layer thickness and were the same as in Example 1. The tungsten-halogen lamp used in Example 1 was traversed over each printed layer at a speed of 20.3 mm/sec. At the completion of the build process, the partially bonded object was removed from the surrounding unbound material and heat-treated in the convection oven for 2 hours at 95 Celsius. After heat treatment the flexural strength of the material was 54 MPa; tensile strength 35 MPa, elongation at break 2.2%. A 50-layer part had good dimensional stability but had issues with caking (build material from the unprinted areas melted on the surface of the part)

Example 3

Production of the tensile specimen using a fast-drying PVA system.
In this example the build material consisted of 20 % milled polyvinyl alcohol with a mean grain size approximately 100 microns, and 80% of aminosilane-modified glass beads glass beads (Potter Industries "Spheriglass" 2530 CP03 grade). Absorber fluid, volume fraction of the absorber fluid and build layer thickness and were the same as in Example 1. The tungsten halogen lamp used in Example 1 passed over each printed layer twice at the speed of 12.7 mm/sec. Tensile strength of the specimen was 6.4 MPa and elongation at break 2.6%. The same material was printed without passing the light source over the printed layer. After 16 hours drying in the printing bed the part was soft and impossible to handle.

Example 4

Production of the tensile specimen from a thermoplastic-thermoset composite system
In this example the build material consisted from 13.8 % milled Topas 5010L (average particle size 85 $\mu$m) and 10.0% granular epoxy: Everclear® from Dupont and 76.2% of glass beads (Potter Industries 3000E grade). Absorber fluid, volume fraction of the absorber fluid and build layer thickness were the same as in Example 1. The tungsten halogen lamp used in the Example 1 passed over each printed layer twice at a speed of 6.4 mm/sec. At the completion of the build process, the partially bonded object was removed from the surrounding unbound material and heat-treated in a convection oven for 16 hours at 100 Celsius. After heat treatment the tensile strength 6.9 MPa, the elongation at break was 3.6%.

Example 5

Using a laser diode for the selective sintering.
In this example both the build material and the absorber were the same as in Example 2. Absorber fluid, volume fraction of the absorber fluid and build layer thickness and were the same as in Example 1. After printing one layer of absorbent, printed area was eliminated by Red Photon Engine LED that has radiant power of 1000 mW, obtained from Teledyne Electronic Technologies. Material has not sintered and the surface temperature increased only to 45 degree Celsius.

Example 6

Production of a wafer by chemical sintering
The thermoplastic filler was CAPA 6501 polycaprolactone from Solvay Caprolactones. In weigh boat experiments, the binder was just deionized water. On a ZPrinter®310, the binder used was zb®58 and the binder volume fraction was about 1.13. Printing was performed with an acidic binder consisting of 90 wt % zb®58 and 10 wt% glacial acetic acid. Binder volume ratio used for this experiment was 0.375 (the zp102 / zb®56 saturation).

**Claims**

1. A kit for three-dimensional printing, the kit comprising:

    a fluid which is adapted to carry an absorber comprising:

        a first solvent,
        a second solvent, and
        an absorber having the ability to absorb radiation and pass the energy absorbed in the form of heat to the particulate material surrounding the absorber, selected from the group consisting of copper hydroxide phosphate, animal charcoal, interference pigments, metal powders, metal compounds, activated charcoal, minerals that are semiconductors which are absorbers for induction heating and minerals which are ionic conductors which are absorbers for induction heating; and
        a particulate adhesive material selected from the group consisting of a thermoplastic material and a thermoset material,
        wherein the first solvent has a boiling point above at least one of a sintering point and
        a melting point of the particulate adhesive material.

**EP 2 001 656 B1**

**Patentansprüche**

1. Kit zum dreidimensionalen Drucken, wobei der Kit umfasst:

   eine Flüssigkeit, die einen Absorber tragen kann, umfassend:

   ein erstes Lösungsmittel;
   ein zweites Lösungsmittel; und
   einen Absorber mit der Fähigkeit, Strahlung zu absorbieren und die absorbierte Energie in Form von Wärme an das teilchenförmige Material,
   das den Absorber umgibt, weiterzugeben, ausgewählt aus der Gruppe, die aus Kupferhydroxidphosphat, Tierkohle, Interferenzpigmenten, Metallpul-vern, Metallverbindungen, Aktivkohle, Mineralien, die Halbleiter sind und
   Induktionsenergie absorbieren, und Mineralien, die Ionenleiter sind und
   Induktionsenergie absorbieren, besteht; und
   einen teilchenförmigen Klebstoff, der aus der Gruppe ausgewählt ist, die aus einem thermoplastischen Material und einem duroplastischen Material besteht;
   wobei das erste Lösungsmittel einen Siedepunkt oberhalb eines Sinte-rungspunkts und/oder eines Schmelzpunkts des teilchenförmigen Kleb-stoffs aufweist.

**Revendications**

1. Trousse pour l'impression tridimensionnelle, la trousse comprenant :

   un liquide adapté pour porter un absorbeur, comprenant :

   un premier solvant,
   un second solvant, et
   un absorbeur capable d'absorber du rayonnement et de passer l'énergie absorbée sous forme de chaleur au matériau particulaire entourant l'absorbeur, choisi dans le groupe consistant en de l'hydroxyde-phosphate de cuivre, du noir animal, des pigments interférentiels, des poudres métalliques, des composés métalliques, du charbon activé, des minéraux semiconducteurs qui sont des absorbeurs pour le chauffage par induction, et des minéraux conducteurs d'ions qui sont des absorbeurs pour le chauffage par induction ; et
   un matériau adhésif particulaire choisi dans le groupe consistant en un matériau thermoplastique et un matériau thermodurci,
   dans laquelle le premier solvant a un point d'ébullition supérieur à au moins un parmi un point de frittage et un point de fusion dudit matériau adhésif particulaire.

Figure 1a

Figure 16

Figures 2a - 2f

Figures 3a – 3t

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 78975806 P
- US 5338611 A
- DE 19727677
- WO 2005090055 A1
- WO 2005105412 A1
- WO 2005011959 A
- US 20040166187 A1
- WO 9732671 A
- US 20050003189 A1
- WO 2004005014 A
- DE 102004020452
- WO 2005105412 A
- US 20040232583 A1
- US 5204055 A
- US 6007318 A
- US 6136948 A
- WO 9606881 A
- WO 2004048463A1 A
- US 5902441 A
- US 6610429 B
- EP 1226019 B1
- US 20040056378 A1
- US 20050003189 A
- US 5053090 A
- US 6531086 B
- US 5940674 A
- WO 2004048463 A1
- WO 0238677 A
- US 6600142 B
- US 6348679 B
- US 20010197431 A1
- US 20040056378 A
- US 5328539 A
- US 5182134 A

### Non-patent literature cited in the description

- **B.M. DAS.** Advanced Soil Mechanics. *Hemisphere Pr.,* 1997, 315-317
- **S. ARANSON ; L. S. TSIMRING.** The Physics of Granular Media. Wiley-VCH, 2004, 146-147
- **B.M. DAS.** Advanced Soil Mechanics. *Hemisphere Pr.,* 1997, 313-326